# EUROPEAN PATENT APPLICATION

(11) **EP 4 576 124 A1**
(43) Date of publication of application: **25.06.2025**
(21) Application number: 23872238.3
(22) Date of filing: 25.09.2023
(51) Int. Cl.: H01B 7/00, H01B 13/012, H02G 1/06

(54) **WIRING HARNESS AND WIRING HARNESS BINDING PROCESSING METHOD**

(30) Priority: 27.09.2022 JP 2022153739
(71) Applicant: Muscle Corporation, Osaka-shi, Osaka 541-0042 (JP); MAZDA MOTOR CORPORATION, Hiroshima 730-8670 (JP)
(72) Inventor: TAMAI, Hirofumi, Osaka-shi, Osaka 541-0042 (JP); NAKAMOTO, Kenta, Aki-gun, Hiroshima 730-8670 (JP); FUJII, Yoshiharu, Aki-gun, Hiroshima 730-8670 (JP); NISHIHARA, Hiroyuki, Aki-gun, Hiroshima 730-8670 (JP); TAKAHASHI, Hidenori, Aki-gun, Hiroshima 730-8670 (JP)
(74) Representative: Herrmann, Uwe
(86) International application number: PCT/JP2023/034659
(87) International publication number: WO 2024/071015

(57) **Abstract**

Provided are a wire harness, a wire harness binding processor, and a wire harness binding processing method each of which enables automation and acceleration of a work of binding a plurality of electric wires with a binder by continuously binding the electric wires with the binder, and achieves prevention of a reduction in a binding force of binding the electric wires. A wire harness 100 includes: a bundle assembly W including a plurality of electric wires; and a binder 10 that is defined by a linear member S having flexibility and binds the bundle assembly. The binder 10 has a plurality of loop parts 20 being consecutive. The loop parts 20 are arrayed in longitudinal directions of the bundle assembly W, adjacent loop parts 20 of the loop parts being connected to each other to bind the bundle assembly W.

## Description

### Technical Field

The present invention relates to a wire harness including: a bundle assembly including a plurality of electric wires; and a binder that is defined by a linear member having flexibility and binds the bundle assembly, and relates to a wire harness binding processing method.

### Background Art

Wire harnesses each including bound electric wires, such as electric wires and optical fibers for electric power source supply and signal communication, have been conventionally adopted for automobiles and various kinds of machines. Processing of manufacturing such a wire harness involves a work of binding the electric wires with an adhesive tape or other binder.

It would take a much longer time for a worker to manually perform the work of binding the electric wires with the binder. Moreover, different workers have different skill levels, which may lead to different qualities of wire harnesses. From these perspectives, wire harness manufacturing apparatuses that enable automation of a work of binding electric wires with a binder have been proposed.

For instance, an apparatus for manufacturing a wire harness disclosed in Patent Literature 1 includes a tape winding device that is movable freely in three-dimensional directions relative to a plurality of electric wires placed on a harness wiring device to wind the tape around the electric wires.

The apparatus for manufacturing a wire harness in Patent Literature 1 enables automation of a work of binding the electric wires with an adhesive tape. Unfortunately, the apparatus for manufacturing a wire harness in Patent Literature 1 is configured to wind the adhesive tape on one portion by one portion and cut the adhesive tape per portion. Thus, the apparatus for manufacturing a wire harness in Patent Literature 1 has a disadvantage, resulting from impossibility of continuously winding the adhesive tape around the electric wires, that a long time is required to bind a plurality of electric wires with a binder.

Another apparatus for manufacturing a wire harness that enables acceleration of a work of binding a plurality of electric wires with a binder in place of the adhesive tape has been proposed. For instance, an apparatus for manufacturing a wire harness disclosed in Patent Literature 2 adopts a linear material, such as a yarn, a thread, or a string, for a binder. The apparatus for manufacturing a wire harness moves a bundle of electric wires in longitudinal directions and causes a free-rotating reel that supplies the linear material around the electric wires to rotate so that the linear material is spirally wound around the bundle of electric wires.

The apparatus for manufacturing a wire harness in Patent Literature 2 enables acceleration of the work of binding the electric wires with the binder by spirally winding the linear material, such as a yarn, a thread, or a string being continuous, around the electric wires to bind the electric wires.

### Citation List

### Patent Literature

Patent Literature 1: Japanese Unexamined Patent Publication No. 2008-192456
Patent Literature 2: Japanese Unexamined Utility-Model Publication No. HEI 6-5031

### Summary of Invention

Unfortunately, in the apparatus for manufacturing a wire harness in Patent Literature 2, the linear material spirally wound around the electric wires is not fixed to the electric wires unlike the adhesive tape, and further has no fixed portion, such as a tie, to keep the spiral state. This may lead to displacement of the linear material relative to the electric wires and a failure at keeping the spiral state, and eventually result in a reduction in a binding force of binding the electric wires.

An object of the present invention is to provide a wire harness and a wire harness binding processing method each of which enables automation and acceleration of a work of binding a plurality of electric wires with a binder by continuously binding the electric wires with the binder, and achieves prevention of a reduction in a binding force of binding the electric wires.

A wire harness according to the present invention is a wire harness including: a bundle assembly including a plurality of electric wires; and a binder that is defined by a linear member having flexibility and binds the bundle assembly. The binder has a plurality of loop parts being consecutive, and the loop parts are arrayed in longitudinal directions of the bundle assembly, adjacent loop parts of the loop parts being connected to each other to bind the bundle assembly.

A wire harness binding processing method according to the present invention is a wire harness binding processing method for binding a bundle assembly including a plurality of electric wires with a binder defined by a linear member having flexibility to form a wire harness. The wire harness binding processing method includes a step of forming a plurality of loop parts and connecting the loop parts to each other in longitudinal directions of the bundle assembly.

A wire harness and a wire harness binding processing method according to the present invention enable automation and acceleration of a work of binding a plurality of electric wires with a binder by continuously binding the electric wires with the binder, and achieve prevention of a reduction in a binding force of binding the electric wires.

### Brief Description of Drawings

Fig. 1A to 1D include illustrations each pertaining to a portion of a wire harness according to a first embodiment of the present invention.
Fig. 2 is a perspective view illustrating an overall configuration of a wire harness binding processor in the first embodiment of the present invention.
Fig. 3 is an enlarged perspective view of a binding device body.
Fig. 4 is a perspective view of the binding device body seen in a direction different from a direction in Fig. 3.
Fig. 5 is an illustration of the binding device body in a view in Y-axial directions.
Fig. 6A and 6B include explanatory views of operations of a linear member putting section.
Fig. 7 includes explanatory views of operations of the binding device body in Z-axial directions.
Fig. 8 is an explanatory view of operations of the binding device body in X-axial directions and the Y-axial directions.
Fig. 9A includes explanatory views of a first connection step.
Fig. 9B includes explanatory views of the first connection step.
Fig. 9C includes explanatory views of the first connection step.
Fig. 9D includes explanatory views of the first connection step.
Fig. 10 is a flowchart of a binding process in a wire harness binding processing method.
Fig. 11 is a schematic cross-sectional view of a bundle assembly.
Fig. 12 is an enlarged view associated with Fig. 1A.
Fig. 13 corresponds to Fig. 12 except for additionally illustrating constraints with dashed lines.
Fig. 14 is a graph showing a relation between a diameter of the bundle assembly and a temperature relying shift proportion.
Fig. 15 is a schematic view for explaining a calculation sequence of a temperature relying shift amount.
Fig. 16 is a graph showing a relation between a pitch and the temperature relying shift proportion.
Fig. 17 is an illustration of a portion of a wire harness according to a second embodiment.
Fig. 18 is an illustration of a first circumferential surface section of a wire harness according to a third embodiment.
Fig. 19 is an illustration of a second circumferential surface section of the wire harness according to the third embodiment.
Fig. 20 is an illustration of a portion of a wire harness according to a fourth embodiment.
Fig. 21 is an illustration of a portion of a wire harness according to another example.
Fig 22 is an illustration of a portion of a wire harness according to still another example.

### Description of Embodiments

### First Embodiment

Hereinafter, a wire harness 100, a wire harness binding processor 200, and a wire harness binding processing method in an embodiment of the present invention will be described in detail with reference to the accompanying drawings. The same or corresponding components in the drawings are given the same reference signs or numerals without repetitive description therefor. Some of the drawings to be referred to hereafter illustrate a simplified configuration or a schematic configuration, or omit a part of constituent elements for better understanding of the description. It should be noted that the dimensional ratios concerning the structural components shown in the drawings do not perfectly follow actual dimensional ratios concerning these components.

In the following description, a +Z-axial direction of the wire harness binding processor 200 is defined as a vertically upward direction and a -Z-axial direction thereof is defined as a vertically downward direction. A direction perpendicularly intersecting the +Z-axial direction is defined as a +X-axial direction, and a direction perpendicularly intersecting the +Z-axial direction and the +X-axial direction is defined as a +Y-axial direction. A direction opposite to the +X-axial direction is defined as a -X-axial direction and a direction opposite to the +Y-axial direction is defined as a -Y-axial direction. The reason for defining the +Z-axial direction of the wire harness binding processor 200 as a vertical direction lies in convenience of explanation. Hence, each of the X-axial directions, the Y-axial directions, and the Z-axial directions of the wire harness binding processor 200 may be defined as any direction without limitation to the direction described in the embodiment.

### Wire harness

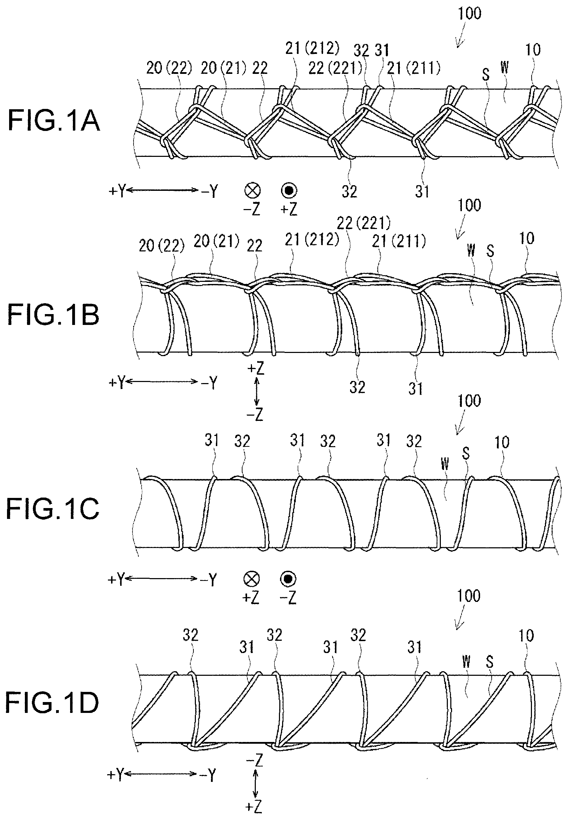

First, a wire harness will be described. Fig. 1A to 1D include illustrations each pertaining to a portion of the wire harness 100 according to the first embodiment of the present invention. The wire harness 100 includes: a bundle assembly W including a plurality of electric wires; and a binder 10 that is defined by a linear member S having flexibility and binds the bundle assembly.

Fig. 1 A to 1D illustrate the wire harness 100 in different directions at different angles by 90° respectively. Fig. 1A is a top view of the wire harness 100. Fig. 1B is a side view of the wire harness 100. Fig. 1C is a bottom view of the wire harness 100. Fig. 1D is another side view of the wire harness 100 that is opposite to the side view in Fig. 1B. Each of Fig. 1A to Fig 1D defines longitudinal directions of the wire harness 100 as the Y-axial directions and illustrates the wire harness in the Z-axial directions to show an orientation of the wire harness 100.

The electric wires may include electric wires and optical fibers for electric power source supply and signal communication, and may include different kinds of wires. The bundle assembly W may include any kind of wires without limitation. Fig. 1 simply illustrates the bundle assembly W including the electric wires in a columnar shape.

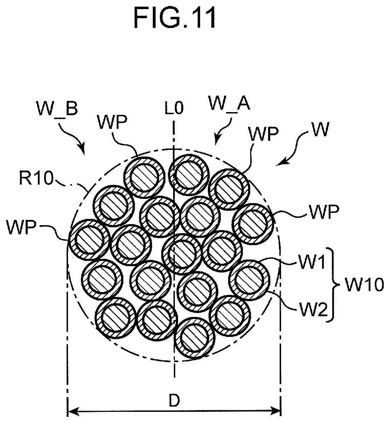

Fig. 11 is a schematic cross-sectional view of the bundle assembly W. As illustrated in Fig. 11, the bundle assembly W includes a plurality of bundle assembly wires W10 each having a length. A group of the bundle assembly wires W10 constitutes the bundle assembly W having the length. The bundle assembly wires W10 serve as the above-described electric wires. As described above, the bundle assembly wires W10 include electric wires and optical fibers. In the first embodiment, the bundle assembly wires W10 respectively have circumferential surfaces covered with a resin material. Specifically, each of the bundle assembly wires W10 has a core W1 made of metal or glass at an inner position and a cover W2 made of resin material and covering the core W1. Accordingly, an entirety of the circumferential surface of the bundle assembly W is covered with the resin material.

Any member having flexibility to bend and a strength (tensile strength) to bind the bundle assembly W may serve as the linear member S. Examples of the linear member include a yarn or thread member, a string member, a band member, a metal wire member without limitation thereto. Further, any material is available without limitation. Examples of the material include: natural fibers, such as cotton and hemp; chemical fibers, such as nylon; and metals such as, copper, aluminum, and stainless. Alternatively, blended fibers, spun yarns, or a filament may be available, or a plurality of these fibers, yarns, or filaments may be twisted together or intertwined together.

As illustrated in Fig. 1, the binder 10 has a plurality of loop parts 20. In the first embodiment, the loop parts 20 include first loops 21 and second loops 22. Each of the first loops 21 extends from a lower right position to an upper left position in Fig. 1A to constitute a loop part 20 having a curving portion at the upper left position. Each of the second loops 22 extends from an upper right position to a lower left position in Fig. 1A to constitute a loop part 20 having a curving portion at the lower left position.

The first loops 21 and the second loops 22 are repetitively and consecutively alternating while each constituting a portion of the linear member S that curves. As illustrated in Fig. 1A and Fig. 1B, the loop parts 20 (the first loops 21 and the second loops 22) are arrayed on the circumferential surface of the bundle assembly W in longitudinal directions of the bundle assembly W. In the following description, each first loop 21 and each second loop 22 will be occasionally described as the loop part 20 without distinction.

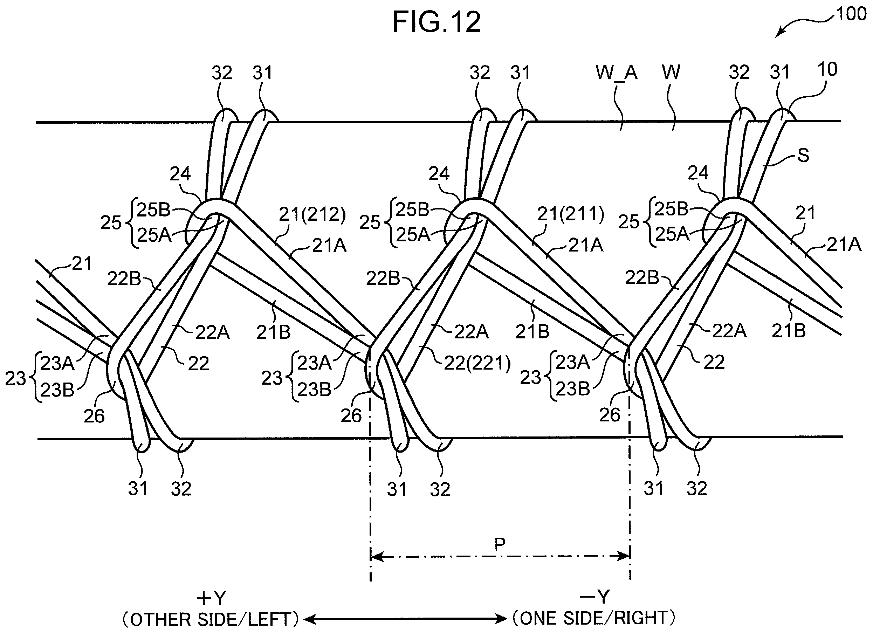

Each element of the binder 10, such as the loop part 20, will be described in detail with reference to Fig. 12 and other drawings. Fig. 12 is an enlarged view of a specific region in Fig. 1A. Hereinafter, appropriately, a circumferential direction of the bundle assembly W will be simply referred to as the "circumferential direction".

The bundle assembly W has the circumferential surface divided into two equal sections of a first circumferential surface section W_A and a second circumferential surface section W_B located opposite the first circumferential surface section W_A in the circumferential direction. Each loop part 20 is located on the first circumferential surface section W_A. Specifically, as illustrated in Fig. 11, in a view of the bundle assembly W in the longitudinal directions as divided on a line L0 passing through the center of the bundle assembly, a circumferential surface section of the bundle assembly W on one side of the line L0 is defined as the first circumferential surface section W_A and a circumferential surface section on the other side of the line is defined as the second circumferential surface section W_B. Each of the first loop 21 and the second loop 22 is located on the first circumferential surface section W_A. In other words, the bundle assembly W has the first circumferential surface section W_A on which the first loop 21 is located and the second circumferential surface section W_B located opposite the first circumferential surface section. It is noted here that Fig. 12 illustrates the bundle assembly W in a view from the first circumferential surface section W_A.

The first loop 21 extends, on the first circumferential surface section W_A, in the longitudinal directions of the bundle assembly W and has a substantially loop or annular shape. The first loop 21 has a first portion 21A extending from a proximal end 23 being one end of the first loop in left-right directions to a distal end 24 being another end of the first loop, and a second portion 21B returning from the distal end 24 to the proximal end 23. The proximal end 23 of the first loop 21 has an end section 23A being one end section of the first portion 21A in the left-right directions and an end section 23B being one end section of the second portion 21B in the left-right directions.

Similarly to the first loop 21, the second loop 22 extends, on the first circumferential surface section W_A, in the left-right directions, i.e., the longitudinal directions of the bundle assembly W, and has a substantially loop or annular shape. The second loop 22 has a third portion 22A extending from a proximal end 25 being one end of the second loop in the left-right directions to a distal end 26 being another end of the second loop, and a fourth portion 22B returning from the distal end 26 to the proximal end 25. The proximal end 25 of the second loop 22 has an end section 25A being one end section of the third portion 22A in the left-right directions and an end section 25B being one end section of the fourth portion 22B in the left-right directions.

Hereinafter, appropriately, the longitudinal directions of the bundle assembly W are referred to as the "left-right directions", and a right side in Fig. 12 being one side of each of the first loop 21 and the second loop 22 in the description, that is, one side of the loop 21, 22 on which the proximal end 23, 25 is located relative to the distal end 24, 26 is defined as "right" and the other side opposite thereto is defined as "left".

Specifically, in the first embodiment, a right end of the first loop 21 serves as the proximal end 23 of the first loop 21 and a left end thereof serves as the distal end 24 of the first loop 21, and a right end of the second loop 22 serves as the proximal end 25 of the second loop 22 and a left end thereof serves as the distal end 26 of the second loop 22. In each example in Fig. 1 and Fig. 12, each of the first loop 21, the first portion 21A, and the second portion 21B extends from the proximal end 23 of the first loop 21 to an upper left position, and each of the second loop 22, the third portion 22A, and the fourth portion 22B extends from the proximal end 25 of the second loop 22 to a lower left position. A portion of the linear member S forming the right end of the first loop 21 curves to bend, and another portion of the linear member S forming the right end of the second loop 22 curves to bend.

The first loop 21 and the second loop 22 are defined by the linear member S having the flexibility. Hence, each of the first loop 21 and the second loop 22 has such a shape as to differ depending on a material of the linear member S and a tensile force applied to the linear member S without limitation to the shape illustrated in Fig. 1. The first loop 21 and the second loop 22 may have the same dimension or length, or may have different dimensions or lengths from each other. Besides, any ratio of the dimension or length of each of the first loop 21 and the second loop 22 to the thickness or diameter of the bundle assembly W is available without limitation.

Adjacent loop parts 20 (a first loop 21 and a second loop 22 adjacent to each other) are connected to each other. Specifically, one second loop 22 passes through one first loop 21 adjacent thereto, and another first loop 21 adjacent to the one second loop 22 passes through the one second loop 22. A repeat of such passing of the loops results in consecutive connection between the adjacent loop parts 20 (the first loop 21 and the second loop 22 adjacent to each other).

In the first embodiment, the state where the first loops 21 and the second loops 22 are "connected" to each other means that one of the first loop 21 and the second loop 22 passes or is inserted through the other and a tensile force is applied to the linear member S in the passing or insertion state, and thus, the first loop 21 and the second loop 22 in the passing or insertion state keep substantially the same shape and substantially the same predetermined positional relation therebetween.

More specifically, as illustrated in Fig. 12, a proximal end 25 of a second loop 221 (22) is wound around a distal end 24 of a first loop 211 (21) adjacent to the right of the second loop 221 (22), and the proximal end 25 of the second loop 221 (22) is thus engaged with the distal end 24 of the first loop 211 (21). In this manner, the first and second loops are connected to each other. A distal end of the second loop 221 (22) is wound around a proximal end 23 of a first loop 212 (21) adjacent to the left of the second loop 221 (22), and the proximal end 23 of the first loop 212 (21) is thus engaged with the distal end 26 of the second loop 221 (22). In this manner, the second and first loops are connected to each other. Consequently, a proximal end of one loop part 20 and a distal end of another loop part 20 adjacent thereto are connected to each other, that is, each of the loop parts 20 is connected to another loop part 20 adjacent thereto.

The linear member S defines a first constraint 31 between one first loop 21 and one second loop 22 connected to each other. The linear member S further defines a second constraint 32 between the one second loop 22 and another first loop 21 connected to each other.

Specifically, as illustrated in Fig. 1A and Fig. 1B, the first constraint 31 constitutes a portion of the linear member S from the first loop 21 (211) to the second loop 22 (221) where the second loop 22 (221) passes through the first loop 21 (211). The second constraint 32 constitutes another portion of the linear member S from the second loop 22 (221) to the first loop 21 (212) where the first loop 21 (212) passes through the second loop 22 (221).

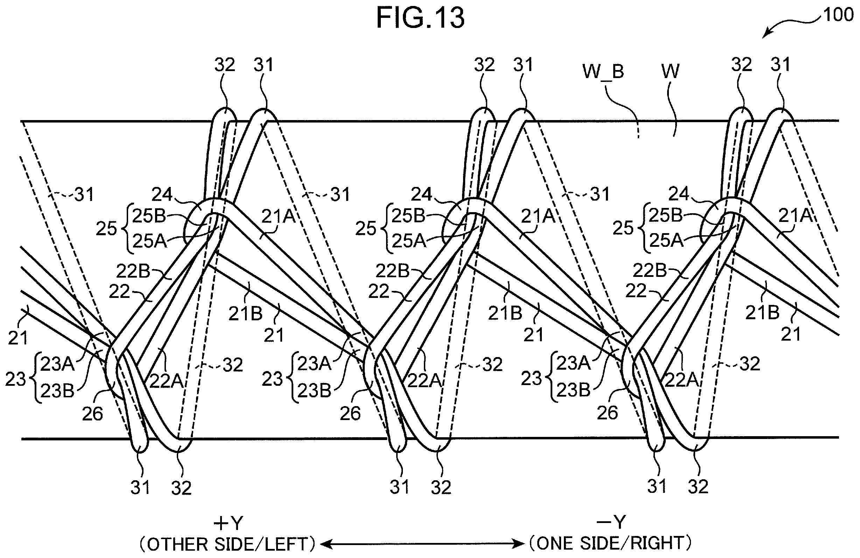

Fig. 13 illustrates a portion of the binder 10 located at a position corresponding to the back of the sheet of Fig. 12, that is, on the second circumferential surface section W_B with dashed lines, and corresponds to Fig. 12 except for additionally illustrating the first constraint 31 and the second constraint 32 with dashed lines. As illustrated in Fig. 1A and Fig. 1B, and Fig. 13, the first constraint 31 extends from the proximal end 23 of the first loop 21 to the distal end 24 of the first loop 21 via the second circumferential surface section W_B. The second constraint 32 extends from the proximal end 25 of the second loop 22 to the distal end 26 of the second loop 22 via the second circumferential surface section W_B.

The first loop 21 and the first constraint 31 extending from the proximal end 23 to the distal end 24 of the first loop 21 go around the circumferential surface of the bundle assembly W once. In other words, a whole circumference of the circumferential surface of the bundle assembly W is surrounded by first loop 21 and the first constraint 31 extending from the proximal end 23 to the distal end 24 of the first loop 21. Similarly, the second loop 22 and the second constraint 32 extending from the proximal end 25 to the distal end 26 of the second loop 22 go around the circumferential surface of the bundle assembly W once. In other words, a whole circumference of the circumferential surface of the bundle assembly W is surrounded by the second loop 22 and the second constraint 32 extending from the proximal end 25 to the distal end 26 of the second loop 22.

In the first embodiment, each of the first constraint 31 and the second constraint 32 is longer than each of the first loop 21 and the second loop 22 in the circumferential direction. Here, the first constraint 31 has a length equivalent to a length of the second constraint 32 in the circumferential direction. Besides, the first loop 21 has a length equivalent to a length of the second loop 22 in the circumferential direction.

In the first embodiment, the linear member S being continuous to surround the bundle assembly W is solely chain-woven to define the binder 10. Consequently, the linear member S solely and continuously defines the first portion 21A, the second portion 21B, the third portion 22A, the fourth portion 22B, the first constraint 31, and the second constraint 32.

The "chain-weaving" here means a way of weaving a linear member into loops or stiches to be defined by the linear member and consecutively connected in a series. In the first embodiment, the linear member S is chain-woven into the loops in such a manner that all the loops surround the bundle assembly W to form the binder 10. A procedure of forming the binder 10 will be described in detail later.

The first constraint 31 is directly connected to the third portion 22A at the proximal end 25 of the second loop 22. In other words, the first constraint 31 extends from a right end section 25A of the third portion 22A constituting the proximal end 25 of the second loop 22. The second constraint 32 is directly connected to the fourth portion 22B at the proximal end 25 of the second loop 22, and extends from a right end section 25B of the fourth portion 22B constituting the proximal end 25 of the second loop 22.

The first constraint 31 is directly connected to the second portion 21B at the proximal end 23 of the first loop 21, and extends from a right end section 23B of the second portion 21B constituting the proximal end 23 of the first loop 21. The second constraint 32 is directly connected to a first portion 21A at a proximal end 23 of another first loop 21, and extends from an end section 23A of the first portion 21A constituting the proximal end 23 of the another first loop 21.

As described above, adjacent loop parts 20 (the first loop 21 and the second loop 22 adjacent to each other) are connected to each other to define the first constraint 31 and the second constraint 32 in such a manner as to go around the circumferential surface of the bundle assembly W. The first constraint 31 and the second constraint 32 tighten the bundle assembly W with the tensile force applied to the linear member S, so that the binder 10 binds the bundle assembly W.

Further, the connection between the adjacent loop parts 20 (the first loop 21 and the second loop 22 adjacent to each other) leads to less shift of the linear member S owing to friction between adjacent portions of the linear member S and avoidance of a reduction in the tensile force applied to the linear member S. This consequently achieves prevention of a reduction in a binding force of binding the bundle assembly W.

Moreover, in the wire harness 100 according to the first embodiment, the first constraint 31 is directly connected to the third portion 22A at the proximal end 25 of the second loop 22. Hence, the wire harness 100 according to the first embodiment achieves simplification of a wiring structure of the linear member S at the proximal end 25 of the second loop 22. This results in achievement in a reduction in the labor required for wiring of the linear member S, that is, a reduction in the labor required to constrain the bundle assembly W with the linear member S. Similarly, in the wire harness 100 according to the first embodiment, the second constraint 32 is directly connected to the first portion 21A at the proximal end 23 of the another first loop 21. This also contributes to the simplification of the wiring structure of the linear member S and further to the reduction in the labor required to constrain the bundle assembly W with the linear member S.

It is noted here that the loop parts 20 are arrayed at substantially equal intervals in the left-right directions. The proximal ends 23 of the two first loops 21 adjacent to each other are apart from each other at a pitch P being a distance between the loops in the left-right directions without a limitation to a numeric value of the pitch P. In addition, the dimension of the bundle assembly W is not limited. In this regard, the present inventors have found that definitions of a diameter D of the bundle assembly W ranging from 8 mm to 200 mm and the pitch P between the loop parts 20 that is longer than 0 mm and not longer than 18 mm achieves an increase in the robustness of the wire harness against a temperature change. Specifically, a diameter D of an imaginary circle R10 illustrated in Fig. 11 with a chain line and surrounding the entirety of the bundle assembly W through points WP on the circumferential surface of the bundle assembly W in a view in the left-right directions is defined to range from 8 mm to 20 mm, and the pitch P between the adjacent loop parts 20 is defined to be longer than 0 mm and not longer than 18 mm. The wire harness has increased robustness with the definitions.

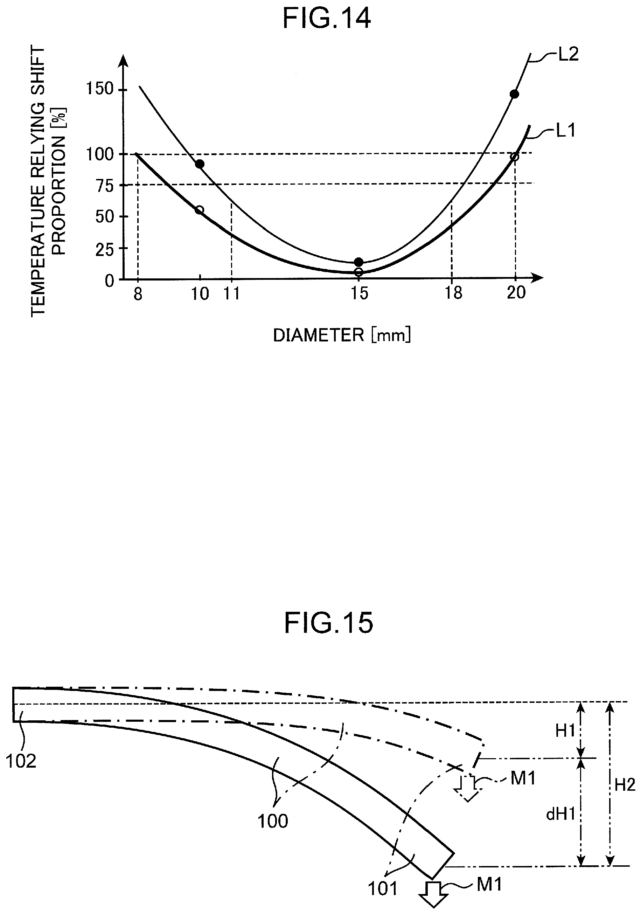

Fig. 14 is a graph showing a relation between the diameter D of the bundle assembly W or the imaginary circle R10 and a temperature relying shift proportion. A line L1 in Fig. 14 represents the relation at the pitch P of 2.0 mm between the loop parts 20, and the line L2 represents the relation at the pitch of 10 mm.

A temperature relying shift proportion on the vertical axis in Fig. 14 represents a proportion of a temperature relying shift amount of the wire harness 100 including the bundle assembly W bound with the binder 10 to a temperature relying shift amount of a conventional wire harness including a bundle assembly W bound with a tape in place of the binder 10. The temperature relying shift amount will be described with reference to Fig. 15. Fig. 15 is a schematic view for explaining the temperature relying shift amount of the wire harness. As shown in Fig. 15, in a case where one end of the wire harness 100 in the longitudinal directions is fixed in a one-end held manner and a load M1 is applied to another end 101 being a free end 101, the wire harness 100 bends and the free end 101 reaches a position lower than a position of the fixed end 102. Here, when an ambient temperature, that is, a temperature of the wire harness 100 is low, the wire harness 100 is less likely to deform. Therefore, even under the application of the same load M1 to the free end 101, the wire harness comes to the state denoted by the dash-dotted line in Fig. 15 when the temperature is low in comparison with the state denoted by the solid line in Fig. 15 when the temperature is high. A distance between the free end 101 and the fixed end 102 in the height direction, i.e., a maximum deflection amount, is shorter or smaller at the lower ambient temperature than a corresponding distance at the high ambient temperature. The present inventors have studied maximum deflection amounts respectively at the ambient temperature of 20°C and the ambient temperature of 4°C. Further, a difference dH1 between the maximum deflection amount (H2) at the ambient temperature of 20°C and the maximum deflection amount (H1) at the ambient temperature of 4°C was calculated to be the temperature relying shift amount of the wire harness 100. In addition, a temperature relying shift amount of the conventional wire harness was calculated in the same manner. A proportion of the temperature relying shift amount of the wire harness 100 to a temperature relying shift amount of the conventional wire harness was calculated to be the temperature relying shift proportion as described above. For instance, in a case where the temperature relying shift amount of the conventional wire harness was 12 mm and the temperature relying shift amount of the wire harness according to the first embodiment was 6 mm, the temperature relying shift proportion was calculated to be 50%.

A small value of the temperature relying shift proportion calculated in the aforementioned manner means that a shift amount of the wire harness is less likely to change even in a change in the temperature. It is seen from this perspective that the smaller value of the temperature relying shift proportion more effectively avoids a fluctuation in the shift or movement of the wire harness relying on the change in the temperature and shows greater robustness against the temperature change. When the temperature relying shift proportion is 100%, the robustness of the wire harness against the temperature change is equivalent to the robustness of the conventional wire harness. When the temperature relying shift proportion is less than 100%, the robustness of the wire harness against the temperature change is greater than the robustness of the conventional wire harness.

As shown in Fig. 14, concerning both the lines L1, L2, the temperature relying shift proportion becomes minimum under the definition of the diameter D of the bundle assembly W as 15 mm, and the temperature relying shift proportion increases in each of the cases where the diameter D increases from 15 mm and where the diameter D decreases therefrom.

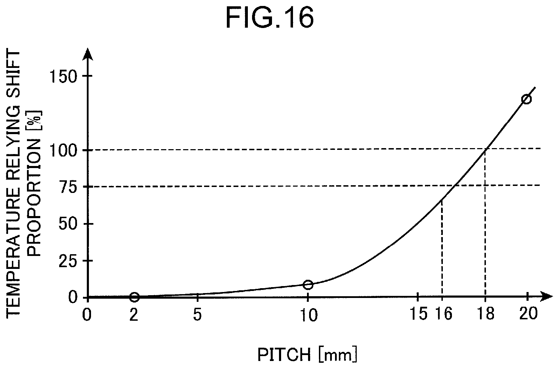

Fig. 16 is a graph showing a relation between the pitch P and the temperature relying shift proportion under the definition of the diameter D of the bundle assembly W as 15 mm. As shown in Fig. 16 and seen from the comparison with the lines L1, L2 in Fig. 14, the temperature relying shift proportion increases as the pitch P increases.

As described above, the definition of the diameter D of the bundle assembly W as 15 mm reliably makes the value of the temperature relying shift proportion small. In this regard, as seen from Fig. 14 and Fig. 16, the value of the temperature relying shift proportion is kept small depending on an appropriate pitch P even with another diameter D of the bundle assembly W instead of 15 mm. For instance, when the pitch P is equal to or shorter than 2 mm, the diameter D ranging from 8 mm to 20 mm keeps the temperature relying shift proportion at 100% or less. When the diameter D ranges from 11 mm to 18 mm, the temperature relying shift proportion is kept at 75 % or less under the condition of the pitch P of 10 mm or shorter, or the temperature relying shift proportion is kept at 50 % or less under the condition of the pitch P of 2 mm or shorter. As shown in Fig. 16, when the diameter D of the bundle assembly W is 15 mm, the temperature relying shift proportion is kept at 100 % or less under the condition of the pitch P of 18 mm or shorter. When the diameter D of the bundle assembly W is 15 mm, the temperature relying shift proportion is kept at 75 % or less under the condition of the pitch P of 16 mm or shorter. It is noted here that a too short pitch P may increase a whole length of the linear member S, resulting in cost disadvantages. In this respect, the pitch P is preferably 2 mm or longer.

In the first embodiment, the diameter D of the bundle assembly W is defined to range from 11 mm to 18 mm, and the pitch P is defined to range from 2 mm to 16 mm on the basis of the above-described knowledge.

### Wire harness binding processor

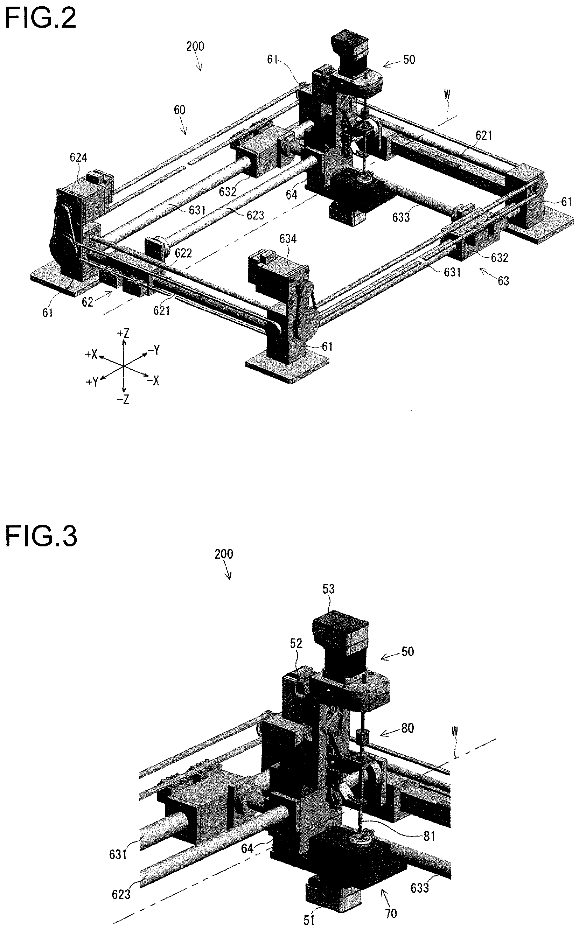

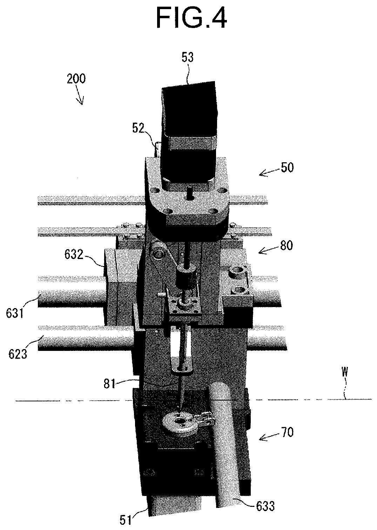

Next, the wire harness binding processor 200 will be described. Fig. 2 is a perspective view illustrating an overall configuration of the wire harness binding processor 200 in the first embodiment of the present invention. Fig. 3 is an enlarged perspective view of a binding device body 50. Fig. 4 is a perspective view of the binding device body 50 seen in a direction different from a direction in Fig. 3.

The wire harness binding processor 200 performs a binding process of binding the bundle assembly W including the plurality of electric wires with the binder 10 defined by the linear member S having the flexibility to form the wire harness 100 including the binder 10 having the plurality of loop parts 20 (first loops 21 and second loops 22) connected to each other as illustrated in Fig. 1.

The wire harness binding processor 200 performs the binding process to connect the loop parts 20 (first loops 21 and second loops 22) to each other by continuously executing a connection step of repetitively forming the first loops 21 and the second loops 22 and connecting each first loop and a second loop adjacent thereto to each other.

Specifically, the connection step includes two steps of a first connection step and a second connection step. The first connection step includes pulling a portion of the linear member S so that the portion passes through a first loop 21 formed by curving another portion of the linear member S, and thereby forming a second loop 22 connected to the first loop 21. The second connection step includes pulling still another portion of the linear member S so that the still another portion passes through the second loop 22 formed by curving the portion of the linear member S, and thereby forming another first loop 21 connected to the second loop 22. The wire harness binding processor 200 performs the binding process to connect the loop parts 20 (first loops 21 and second loops 22) to each other by continuously alternating the first connection step and the second connection step.

As illustrated in Fig. 2, the wire harness binding processor 200 in the embodiment performs the binding process to bind the bundle assembly W placed in the Y-axial directions with the binder 10. Here, the "longitudinal directions of the bundle assembly" in the present invention corresponds to the Y-axial directions.

The wire harness binding processor 200 includes the binding device body 50 and a guiding device 60. The binding device body 50 executes the binding process to form the binder 10 with the linear member S and bind the bundle assembly W while moving in the X-axial directions and the Y-axial directions relative to the bundle assembly W placed in the Y-axial directions. The guiding device 60 is configured to move the binding device body 50 in the X-axial directions and the Y-axial directions. Operations of the wire harness binding processor 200 including the binding device body 50 and the guiding device 60 are controlled by an unillustrated controller.

### Guiding device

As illustrated in Fig. 2, the guiding device 60 has a support 61, an X-axial guiding part 62, a Y-axial guiding part 63, and a movable part 64.

Here, four supports 61 are arranged at intervals in the X-axial directions and the Y-axial directions and support the associated X-axial guiding part 62 and the associated Y-axial guiding part 63. Each support 61 is fixedly attached to an unillustrated device base or other base member.

The X-axial guiding part 62 controls a position of the movable part 64 in the X-axial directions to control a position of the binding device body 50 fixed to the movable part 64 in the X-axial directions. The X-axial guiding part 62 has an X-axial fixing guide 621, an X-axial movable section 622, an X-axial movable guide 623, and an X-axial driving section 624.

Here, two X-axial fixing guides 621 are arranged at a distance therebetween in the Y-axial directions and are respectively supported by the associated supports 61 in such a manner as to be parallel to each other in the X-axial directions. Further, two X-axial movable sections 622 are arranged and supported movably relative to the associated X-axial fixing guides 621. The X-axial movable guide 623 connects the two X-axial movable sections 622 to each other and is movable together with the X-axial movable sections 622 in the X-axial directions while keeping parallel to the Y-axial directions. The X-axial movable guide 623 supports the movable part 64 movably in the Y-axial directions.

The X-axial driving section 624 is configured to move each X-axial movable section 622 in the X-axial directions. In the embodiment, the X-axial driving section 624 has a belt, a pulley, a stepping motor, and other components. The belt is fixed to the X-axial movable section 622. The stepping motor is configured to appropriately move the belt gradually by a predetermined amount, so that the position of the X-axial movable section 622 in the X-axial directions is controlled. This enables control of the position of the movable part 64 supported by the X-axial movable guide 623 and the position of the binding device body 50 fixed to the movable part 64 in the X-axial directions.

The Y-axial guiding part 63 controls a position of the movable part 64 in the Y-axial directions to control a position of the binding device body 50 fixed to the movable part 64 in the Y-axial directions. The Y-axial guiding part 63 has substantially the same configuration as the X-axial guiding part 62. The Y-axial guiding part 63 has a Y-axial fixing guide 631, a Y-axial movable section 632, a Y-axial movable guide 633, and a Y-axial driving section 634.

Here, two Y-axial fixing guides 631 are arranged at a distance therebetween in the X-axial directions and are respectively supported by the associated supports 61 in such a manner as to be parallel to each other in the Y-axial directions. Two Y-axial movable sections 632 are arranged and supported movably relative to the associated Y-axial fixing guides 631. The Y-axial movable guide 633 connects the two Y-axial movable sections 632 to each other and is movable together with the Y-axial movable sections 632 in the Y-axial directions while keeping parallel to the X-axial directions. The Y-axial movable guide 633 supports the movable part 64 movably in the X-axial directions.

The Y-axial driving section 634 is configured to move each Y-axial movable section 632 in the Y-axial directions. In the embodiment, the Y-axial driving section 634 has a belt, a pulley, a stepping motor, and other components. The belt is fixed to the Y-axial movable section 632. The stepping motor is configured to appropriately move the belt gradually by a predetermined amount, so that the position of the Y-axial movable section 632 in the Y-axial directions is controlled. This enables control of the position of the movable part 64 supported by the Y-axial movable guide 633 and the position of the binding device body 50 fixed to the movable part 64 in the Y-axial directions.

The guiding device 60 controls the position of the movable part 64 in each of the X-axial directions and the Y-axial directions to enable control of the position of the binding device body 50 fixed to the movable part 64 in each of the X-axial directions and the Y-axial directions.

### Binding device body

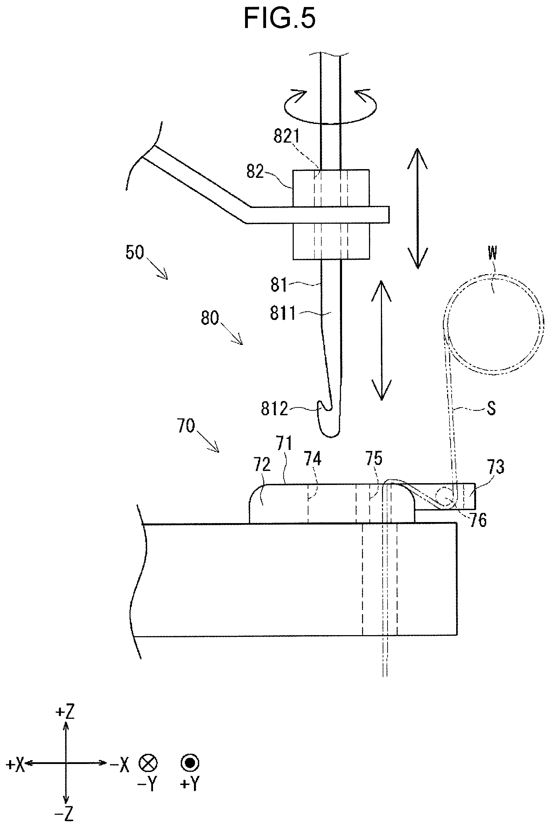

As illustrated in Fig. 3 and Fig. 4, the binding device body 50 includes a linear member supply part 70 and a loop forming part 80. The linear member supply part 70 supplies the linear member S to the loop forming part 80 in the vicinity of the bundle assembly W (see Fig. 5). The loop forming part 80 forms a plurality of loop parts 20 (first loops 21 and second loops 22) with the linear member S supplied from the linear member supply part 70.

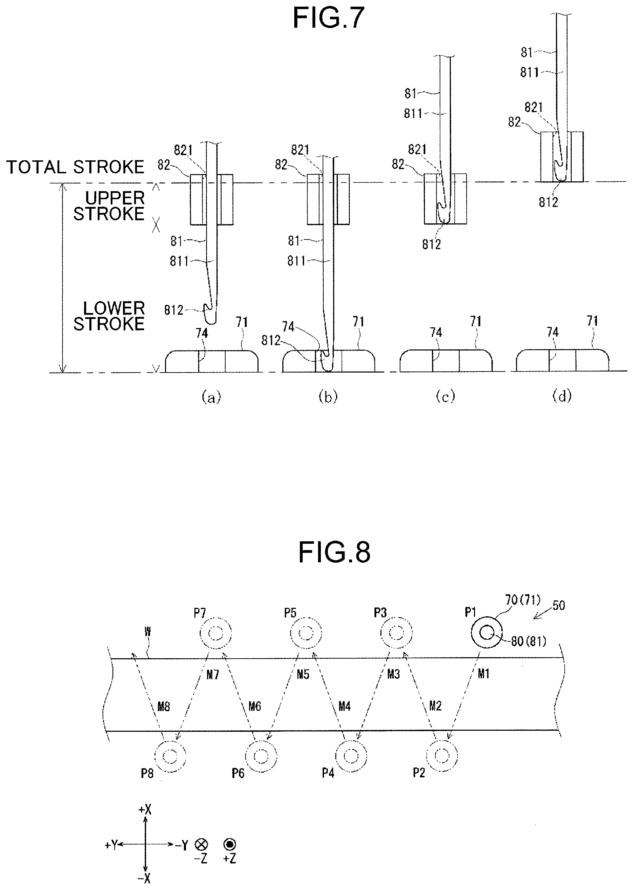

The linear member supply part 70 and the loop forming part 80 execute the binding process to form the binder 10 with the linear member S and to bind the bundle assembly W while moving in the X-axial directions and the Y-axial directions by the guiding device 60 relative to the bundle assembly W placed in the Y-axial directions (see Fig. 8).

The binding device body 50 has a linear member supply driving part 51, a first loop forming driving part 52, and a second loop forming driving part 53. The linear member supply driving part 51 drives the linear member supply part 70. The first loop forming driving part 52 and the second loop forming driving part 53 drive the loop forming part 80.

The loop forming part 80 is configured to be movable in the Z-axial directions, and the first loop forming driving part 52 drives the loop forming part 80 in the Z-axial directions. In the embodiment, the first loop forming driving part 52 has a toggle mechanism, a stepping motor, and other components. The toggle mechanism has one link fixed to the stepping motor and another link fixed to the loop forming part 80. The stepping motor is configured to rotate each link of the toggle mechanism gradually by a predetermined amount, so that the position of the loop forming part 80 in the Z-axial directions is controlled.

The loop forming part 80 has an operative section 81 (see Fig. 5) configured to be rotatable about a Z-axis, and the second loop forming driving part 53 rotates the operative section 81 about the Z-axis. The second loop forming driving part 53 has a stepping motor. The stepping motor is configured to rotate the operative section 81 by a predetermined amount, so that an orientation of the operative section 81 is controlled.

### Linear member supply part

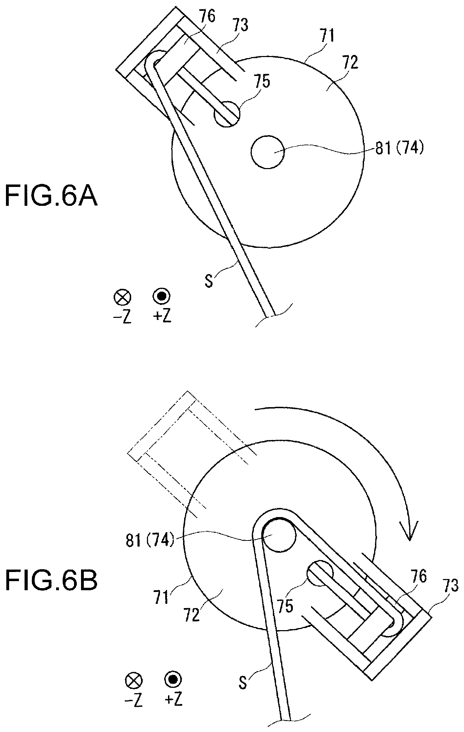

Fig. 5 is an illustration of the binding device body 50 in a view in the Y-axial directions. As illustrated in Fig. 5, the linear member supply part 70 supplies the linear member S to the loop forming part 80 in the vicinity of the bundle assembly W. The linear member supply part 70 has a storage section (not shown), a tensile force adjuster (not shown), and a linear member putting section 71 (see Fig. 6).

The storage section includes, for example, a reel around which the linear member S is wound to store the linear member S and supply the linear member therefrom. The storage section is located below the binding device body 50 or at other place.

The tensile force adjuster is a mechanism that applies an appropriate tensile force to the linear member S. The tensile force adjuster is located between the storage section and the linear member putting section 71. The tensile force adjuster may include a mechanism that utilizes, for example, a gravity based on a weight and a mechanism that utilizes an elastic force of an elastic member, such as a spring.

The linear member putting section 71 puts the linear member S around the operative section 81 of the loop forming part 80. The linear member putting section 71 has a putting main body 72 and an arm 73 (see Fig. 6A and 6B). The putting main body 72 is a member having a substantially disc shape. The putting main body 72 has an insertion hole 74 and a supply hole 75. The insertion hole 74 is defined to receive a distal end or an engagement portion 812 of the operative section 81 of the loop forming part 80 inserted therein (see stage(b) of Fig. 7). The supply hole 75 is defined to receive the linear member S supplied from the storage section and inserted therein.

The arm 73 protrudes outward from the putting main body 72. The arm 73 is provided with a roller 76 inside. The linear member S inserted in the supply hole 75 is supplied toward the bundle assembly W via the roller 76.

The linear member supply driving part 51 is connected to the putting main body 72 (see Fig. 3). The linear member putting section 71 is configured to rotate about the Z-axis by the linear member supply driving part 51 (see Fig. 6A and 6B). Operations of the linear member putting section 71 will be described in detail later.

### Loop forming part

The loop forming part 80 forms a plurality of loop parts 20 (first loops 21 and second loops 22) with the linear member S supplied from the linear member supply part 70. The loop forming part 80 has the operative section 81 and a pressing section 82.

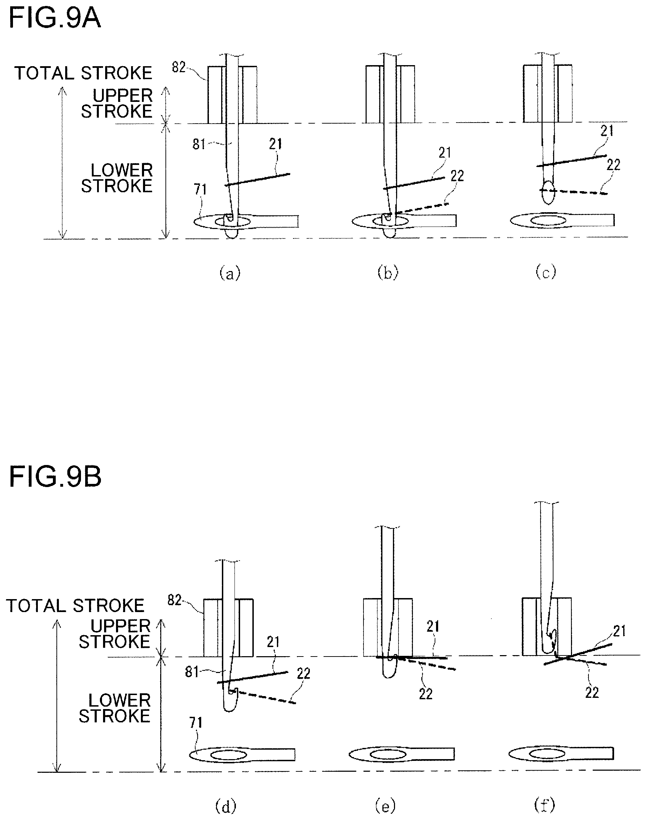

The operative section 81 is a member configured to temporally engage with or hold the linear member S and operate with respect to the linear member S. Specifically, the operative section 81 executes an operation of forming a loop part 20 by curving a portion of the linear member S. The operative section 81 further executes an operation of forming and inserting a subsequent loop part 20 into the formed loop part 20 of the linear member S (see Fig. 9A to Fig. 9D). The embodiment adopts a crochet shaped member having the engagement portion 812 at a distal end of a shaft 811 for the operative section 81. Some embodiments may adopt another shape and another mechanism for the operative section 81 without limitation.

The pressing section 82 is a member to operate in cooperation with the operative section 81 with respect to the linear member S. In the embodiment, the pressing section 82 has a columnar shape, and has an insertion portion 821 to receive the operative section 81 at the center thereof. The operative section 81 is movable in the Z-directions relative to the pressing section 82. The operative section 81 and the pressing section 82 are movable at the same time in the Z-directions. The operative section 81 is further rotatable about the Z-axis relative to the pressing section 82.

### Operations of the linear member supply part

Fig. 6A and 6B include explanatory views of operations of the linear member putting section 71. Fig. 6A illustrates an example posture of the linear member putting section 71 with the arm 73 stopping while facing in an upper left direction. The insertion hole 74 is in a state of receiving the engagement portion 812 of the operative section 81 inserted therein (see stage(b) of Fig. 7). The end side portion of the linear member S supplied through the supply hole 75 extends downward in the drawing without being put around the operative section 81 passing through the insertion hole 74.

Fig. 6B illustrates a posture of the putting main body 72 having rotated rightward from the posture in Fig. 6A. The putting main body 72 rotates until the arm 73 reaches a lower right position and faces in a lower right direction in the drawing, and stops there. In this state, the linear member S supplied through the supply hole 75 is put around the operative section 81 while curving (see stage (b) of Fig. 9A). In the state in Fig. 6B, upward movement of the operative section 81 from the insertion hole 74 allows a curving portion of the linear member S to be engaged with the engagement portion 812 of the operative section 81. The engagement of the linear member S with the engagement portion 812 of the operative section 81 enables the operative section 81 to perform an operation with respect to the linear member S, such as pulling the linear member S upward.

### Operations of the binding device body in the Z-axial directions

Fig. 7 includes explanatory views of operations of the binding device body 50 in the Z-axial directions. As illustrated in Fig. 7, the linear member supply part 70 (the linear member putting section 71) is fixed to the binding device body 50 without a change in its position in the Z-axial directions (see Fig. 4 and Fig. 5). By contrast, the loop forming part 80 (the operative section 81 and the pressing section 82) is configured to be movable in the Z-axial directions. This configuration can change a positional relation between the linear member supply part 70 (the linear member putting section 71) and the loop forming part 80 (the operative section 81 and the pressing section 82) relative to each other in the Z-axial directions by moving the loop forming part 80 (the operative section 81 and the pressing section 82) in the Z-axial directions. Hereinafter, operations respectively illustrated in Fig. 7 will be described.

In the operation illustrated in stage(a) of Fig. 7, the engagement portion 812 of the operative section 81 is apart from the insertion hole 74 of the linear member putting section 71 and located in the +Z-axial direction relative to (located above) the insertion hole 74. The engagement portion 812 of the operative section 81 is further apart from the insertion portion 821 of the pressing section 82 and located under the insertion portion 821.

In the operation illustrated in stage(b) of Fig. 7, the operative section 81 moves downward in the -Z-axial direction from the position in stage(a) of Fig. 7, and the engagement portion 812 of the operative section 81 is inserted in the insertion hole 74 of the linear member putting section 71. The pressing section 82 remains at the same position in the Z-axial directions as the position in stage(a) of Fig. 7.

In the operation illustrated in stage(c) of Fig. 7, the operative section 81 moves upward in the +Z-axial direction to a higher position than the position in each of stage(a) of Fig. 7 and stage(b) of Fig. 7, and the engagement portion 812 of the operative section 81 is inserted in the insertion portion 821 of the pressing section 82. The pressing section 82 remains at the same position in the Z-axial as the position in each of stage(a) of Fig. 7 and stage(b) of Fig. 7.

In the operation illustrated in stage(d) of Fig. 7, the operative section 81 and the pressing section 82 move upward in the +Z-axial direction from the position in stage(c) of Fig. 7 together. The engagement portion 812 of the operative section 81 moves upward together with the pressing section 82 while being in the insertion portion 821 of the pressing section 82.

### Operations of the binding device body in the X-axial directions and the Y-axial directions

Fig. 8 is an explanatory view of operations of the binding device body 50 in the X-axial directions and the Y-axial directions. As illustrated in Fig. 8, the linear member supply part 70 (the linear member putting section 71) and the loop forming part 80 (the operative section 81 and the pressing section 82) constituting the binding device body 50 move in the X-axial directions and the Y-axial directions relative to the bundle assembly W placed at the wire harness binding processor 200 while keeping their respective positions in the X-axial directions and the Y-axial directions relative to each other. Such movement of the binding device body 50 in the X-axial directions and the Y-axial directions is controlled by the guiding device 60 for the position of the device body as described above.

As illustrated in Fig. 8, the binding device body 50 moves, for example, in order of positions P1, P2, ... P7, and P8. Specifically, the binding device body 50 moves in the X-axial directions so that the linear member supply part 70 and the loop forming part 80 are positioned alternately on an +X-side and an -X-side of the bundle assembly W, and move in the +Y-axial direction at the same time gradually by a predetermined distance.

During the movement of the linear member supply part 70 and the loop forming part 80 between the +X-side and the -X-side of the bundle assembly W, the linear member supply part 70 passes through a -Z-side of the bundle assembly W, i.e., passes below the bundle assembly W. The loop forming part 80 passes through a +Z side of the bundle assembly W, i.e., passes above the bundle assembly W. In Fig. 8, the binding device body 50 moves in the +Y-axial direction gradually by the predetermined distance per reciprocation in the X-axial directions. The distance for the movement in the +Y-axial direction may be changed if necessary.

### Operations in the binding process by the wire harness binding processor

As described above, the wire harness binding processor 200 performs the binding process to connect a plurality of loop parts 20 (first loops 21 and second loops 22) by continuously executing the connection step (the first connection step and the second connection step) of repetitively forming the first loops 21 and the second loops 22 and connecting each first loop and a second loop adjacent thereto to each other.

As illustrated in Fig. 8, in the embodiment, the processor executes the first connection step in a state where the binding device body 50 (the linear member supply part 70 and the loop forming part 80) is located on the +X-side of the bundle assembly W, and in a state where the binding device body 50 moves from the +X-side to the -X-side. Besides, the processor executes the second connection step in a state where the binding device body 50 (the linear member supply part 70 and the loop forming part 80) is located on the -X-side of the bundle assembly W and in a state where the binding device body 50 moves from the -X-side to the +X-side.

Specifically, for example, the first connection step is executed in a state where the binding device body 50 (the linear member supply part 70 and the loop forming part 80) is located at the position P1 and in a state where the binding device body is located in a route M1 of the position P1 → the position P2. Similarly, the first connection step is executed at the position P3 and in a route M3, at the position P5 and in a route M5, and at the position P7 and in a route M7.

The first connection step includes connecting a second loop 22 to a first loop 21. Specifically, the first connection step includes pulling a portion of the linear member S so that the portion passes through a first loop 21 formed by curving another portion of the linear member S, and thereby forming a second loop 22 connected to the first loop 21.

In addition, the second connection step is executed in a state where the binding device body 50 (the linear member supply part 70 and the loop forming part 80) is located at the position P2 and in a state where the binding device body is located in a route M2 of the position P2 → the position P3. Similarly, the second connection step is executed at the position P4 and in a route M4, at the position P6 and in a route M6, and at the position P8 and in a route M8.

The second connection step includes connecting another first loop 21 to the second loop 22. Specifically, the second connection step includes pulling still another portion of the linear member S so that the still another portion passes through the second loop 22 formed by curving the portion of the linear member S, and thereby forming the another first loop 21 connected to the second loop 22.

### First binding step

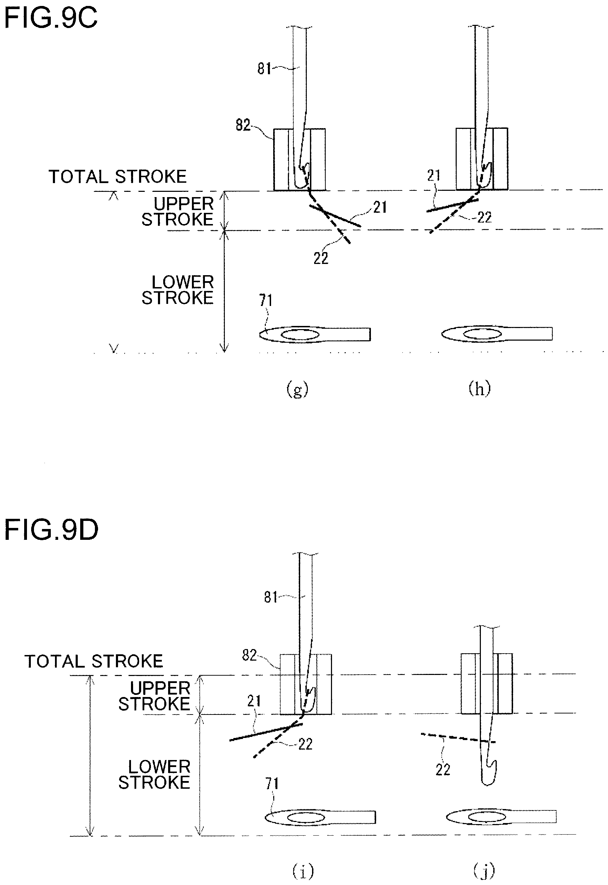

Subsequently, operations in the first connection step by the binding device body 50 (the linear member supply part 70 and the loop forming part 80) will be described in detail. Each of stage(a) of Fig. 9A to stage(j) of Fig. 9D is an explanatory view of the first connection step. Each of stage(a) of Fig. 9A to stage(j) of Fig. 9D illustrates a schematic state where the linear member putting section 71 of the linear member supply part 70, the operative section 81 and the pressing section 82 of the loop forming part 80, and the first loop 21 and the second loop 22 to be formed with the linear member S are viewed in the +Y-axial direction.

The first connection step in stage(a) of Fig. 9A to stage(j) of Fig. 9D will be described to be executed in the state where the binding device body 50 (the linear member supply part 70 and the loop forming part 80) is located at the position P1 in Fig. 8 and in the state where the binding device body is located in the route M1 of the position P1 → the position P2.

The first connection step and the second connection step are in an inverse correlation of a first loop 21 and a second loop 22. That is to say, in the second connection step, the role of the first loop 21 and the role of the second loop 22 are replaced with each other or swapped in each of stage(a) of Fig. 9A to stage(j) of Fig. 9D.

Stage(a) of Fig. 9A illustrates a state where the operative section 81 is moved downward in the -Z-axial direction and the engagement portion 812 of the operative section 81 is inserted in the insertion hole 74 of the linear member putting section 71 at the position P1 in Fig. 8. The linear member S is put around the shaft 811 of the operative section 81 and the linear member S curves. Such a portion of the linear member put around the shaft 811 and curving results in defining a first loop 21. The portion of the linear member S put around the shaft 811 and curving in stage(a) of Fig. 9A corresponds to a portion of the linear member curving and engaged with the engagement portion 812 of the operative section 81 in a preceding step that is not illustrated. Downward movement of the operative section 81 from the position where the engagement portion 812 of the operative section 81 engages with the linear member S allows the shaft 811 of the operative section 81 to pass through the curving portion of the linear member S so that the linear member S is put around the shaft.

Stage(b) of Fig. 9A illustrates a state where the linear member S is put around the operative section 81 through rotation of the linear member putting section 71 (see Fig. 6B). Such a portion of the linear member put around the operative section 81 by the linear member putting section 71 and curving results in defining a second loop 22.

Stage(c) of Fig. 9A illustrates a state where the operative section 81 is rotated about the Z-axis at approximately 90° from the state in stage(b) of Fig. 9A while the operative section 81 is moved upward in the +Z-axial direction from the insertion hole 74. The engagement portion 812 of the operative section 81 engages with the portion to define the second loop 22 in this state. Similarly, the portion to define the first loop 21 put around the shaft 811 of the operative section 81 is pulled or moved upward together with the operative section 81 owing to the friction therewith.

Stage(d) of Fig. 9B illustrates a state where the operative section 81 is rotated about the Z-axis at approximately 180° from the state in stage(b) of Fig. 9A while the operative section 81 is moved further upward in the +Z-axial direction. The engagement portion 812 of the operative section 81 engages with the portion to define the second loop 22 in this state. Similarly, the portion to define the first loop 21 put around the shaft 811 of the operative section 81 is also pulled or moved upward together with the operative section 81.

Stage(e) of Fig. 9B illustrates a state where the engagement portion 812 of the operative section 81 is in a progress of being inserted in the insertion portion 821 of the pressing section 82 by further upward movement of the operative section 81 in the +Z-axial direction. In this state, the portion put around the shaft 811 of the operative section 81 to define the first loop 21 comes into contact with a lower edge of the pressing section 82 without being moved upward. Therefore, the operative section 81 and the portion engaged with the engagement portion 812 of the operative section 81 to define the second loop 22 are moved upward.

Stage(f) of Fig. 9B illustrates a state where the engagement portion 812 of the operative section 81 is inserted in the insertion portion 821 of the pressing section 82 by further upward movement of the operative section 81 in the +Z-axial direction (see stage(c) of Fig. 7). In this state, the portion put around the shaft 811 of the operative section 81 to define the first loop 21 is pushed out by the lower edge of the pressing section 82. By contrast, the portion engaged with the engagement portion 812 of the operative section 81 to define the second loop 22 is inserted in the insertion portion 821 of the pressing section 82. In other words, pulling a certain portion of the linear member S through the first loop 21 results in forming the second loop 22 to be connected to the first loop 21.

Stage(g) of Fig. 9C illustrates a state where the operative section 81 and a pressing section 82 are moved upward together in the +Z-axial direction. The engagement portion 812 of the operative section 81 is moved upward together with the pressing section 82 while being in the insertion portion 821 of the pressing section 82 (see stage(d) of Fig. 7). The operation makes the second loop 22 greatly pulled through the first loop 21. The operation further prevents the operative section 81 and the pressing section 82 from coming into contact with the bundle assembly W in the movement of the linear member supply part 70 and the loop forming part 80 from the position P1 to the position P2 in Fig. 8 across the bundle assembly W.

Stage(h) of Fig. 9C illustrates a state after the operative section 81 and the pressing section 82 are moved together from the position P1 to the position P2 in Fig. 8. The engagement portion 812 of the operative section 81 is moved upward together with the pressing section 82 while being in the insertion portion 821 of the pressing section 82 (see stage(d) of Fig. 7). The operation makes the second loop 22 greatly pulled through the first loop 21. The operative section 81 and the pressing section 82 are moved upward in the +Z-axial direction without coming into contact with the bundle assembly W in the movement of the linear member supply part 70 and the loop forming part 80 from the position P1 to the position P2 across the bundle assembly W.

Stage(i) of Fig. 9D illustrates a state where the operative section 81 and the pressing section 82 are moved downward together in the -Z-axial direction at the position P2 in Fig. 8.

Stage(j) of Fig. 9D illustrates a state where the operative section 81 is moved downward in the -Z-axial direction relative to the pressing section 82. The downward movement of the operative section 81 allows the second loop 22 engaged with the engagement portion 812 to move and be put around the shaft 811.

From the state in stage(j) of Fig. 9D, the connection step is changed from the first connection step to the second connection step at the position P2 in Fig. 8. A binding process to connect a plurality of loop parts 20 (first loops 21 and second loops 22) to each other is performed by repetitively and continuously executing the first connection step illustrated in stage(a) of Fig. 9A to stage(j) of Fig. 9D and the second connection step in which the role of the first loop 21 and the role of the second loop 22 are replaced with each other or swapped in stage(a) of Fig. 9A to stage(j) of Fig. 9D in the movement in the X-axial directions and the Y-axial directions relative to the bundle assembly W as illustrated in Fig. 8.

### Wire harness binding processing method

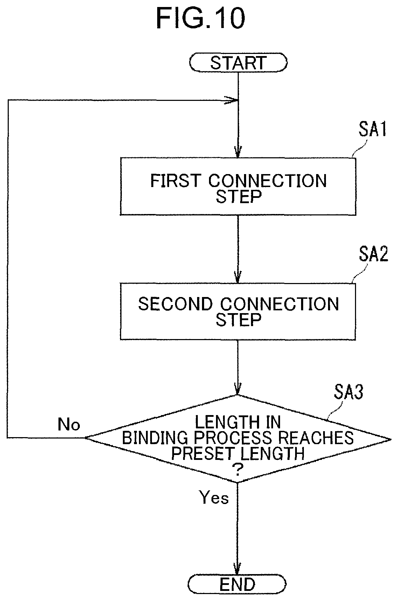

Fig. 10 is a flowchart of a binding process in a wire harness binding processing method. The wire harness binding processing method according to the embodiment includes continuously executing a connection step of repetitively forming first loops 21 and second loops 22 and connecting each first loop and a second loop adjacent thereto to each other.

The connection step includes the first connection step and the second connection step. The first connection step includes pulling a portion of the linear member S so that the portion passes through a first loop 21 formed by curving another portion of the linear member S, and thereby forming a second loop 22 connected to the first loop 21. The second connection step includes pulling still another portion of the linear member S so that the still another portion passes through the second loop 22 formed by curving the portion of the linear member S, and thereby forming another first loop 21 connected to the second loop 22.

As illustrated in Fig. 10, when the binding process is started, the first connection step (SA1) and the second connection step (SA2) are continuously executed. When a length in the binding process reaches a preset length (YES in step SA3), the binding process is finished. When the length in the binding process does not reach the preset length (NO in step SA3), the binding process is continuously executed.

The wire harness 100 according to the embodiment described heretofore includes the binder 10 having a plurality of loop parts 20 (first loops 21 and second loops 22) being consecutive. The loop parts 20 are arrayed in the longitudinal directions of the bundle assembly W, adjacent loop parts 20 of the loop parts being connected to each other to bind the bundle assembly W.

The bundle assembly W is continuously bound with the binder 10 defined by the linear member S having the flexibility. The configuration enables automation of and acceleration of a work of binding the electric wires with the binder 10.

Further, adjacent loop parts 20 are connected to each other to bind the bundle assembly W. This consequently achieves less displacement of the binder 10 relative to the bundle assembly W and prevention of a reduction in a binding force of binding the electric wires.

Each of the wire harness binding processor 200 and the wire harness binding processing method in the embodiment includes connecting a plurality of loop parts 20 to each other by connecting a first loop 21 and a second loop 22 adjacent to each other.

The first loops 21 and the second loops 22 are repetitively formed and are connected to each other. This enables acceleration of the work of binding the electric wires with the binder 10.

### Second embodiment

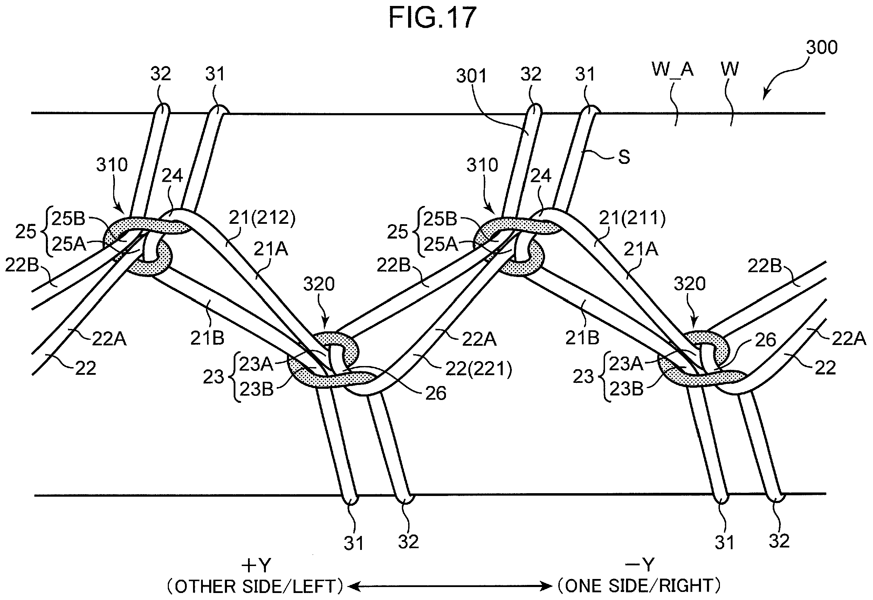

Next, a wire harness 300 according to a second embodiment of the present invention will be described. Fig. 17 is a side view of the wire harness 300 according to the second embodiment. The second embodiment is similar to the first embodiment except for a structure of a connection between loop parts 20 connected to each other. In the description of the second embodiment below, the same elements as those in the first embodiment will be described with the same reference signs or numerals as those in the first embodiment, and the detailed description therefor will be omitted. Besides, in Fig. 17, the elements which are the same as those in the first embodiment will be denoted by the same reference signs or numerals as those in the first embodiment.

Similarly to the wire harness according to the first embodiment, the wire harness 300 according to the second embodiment includes a binder 301 having: a first loop 21 having a first portion 21A and a second portion 21B and located on a first circumferential surface section W_A; a second loop 22 having a third portion 22A and a fourth portion 22B and located on the first circumferential surface section W_A; a first constraint 31 extending from a proximal end 23 to a distal end 24 of the first loop 21 via a second circumferential surface section W_B; and a second constraint 32 extending from a proximal end 25 to a distal end 26 of the second loop 22 via the second circumferential surface section W_B.

In the description of the second embodiment, appropriately, longitudinal directions of a bundle assembly W are referred to as left-right directions, and a right side in Fig. 17 being one side of a first loop 21, that is, a side of the first loop on which the proximal end 23 is located relative to the distal end 24 is defined as "right" and the other side opposite thereto is defined as "left".

Similarly to the first embodiment, in the wire harness 300 according to the second embodiment, a proximal end of a certain loop part 20 and a distal end of another loop part 20 adjacent to each other are connected to each other. It is noted here that the binder 301 includes a connector, and the proximal end of the certain loop part 20 and the distal end of the another loop part 20 are connected to each other via the connector in the second embodiment.

A distal end 24 of a first loop 21 (211) is connected to a proximal end 25 of a second loop 22 (221) adjacent to the left of the first loop 21 (211) via a first connector 310. Specifically, the binder 301 includes the first connector 310 that connects the distal end 24 of the first loop 21 (211) and the proximal end 25 of the second loop 22 (221) adjacent to the left of the first loop 21 (211) to each other. A proximal end 23 of a first loop 21 (212) and a distal end 26 of the second loop 22 (221) adjacent to the right of the first loop 21 (212) are connected to each other via a second connector 320. Specifically, the binder 301 includes the second connector 320 that connects the proximal end 23 of the first loop 21 (212) and the distal end 26 of the second loop 22 (221) adjacent to the right of the first loop 21 (212) to each other. Fig. 17 illustrates the connectors 310, 320 in a hatching manner for clarification.

A linear member S is chain-woven into the first connector 310 and the second connector 320 without surrounding the bundle assembly W. Specifically, similarly to the linear member in the first embodiment, the linear member S being continuous to surround the bundle assembly W is solely chain-woven to define the binder 301 in the second embodiment. Here, the linear member S is woven so that only one of two consecutive loops formed through the chain-weaving surrounds the bundle assembly W and the other of the loops avoids surrounding the bundle assembly W in the second embodiment. Such a loop that avoids surrounding the bundle assembly W constitutes the connector 310, 320.

Specifically, the first connector 310 has a substantially loop or annular shape. The first connector 310 is defined by the linear member S connecting the first constraint 31 and the third portion 22A to each other, and is directly connected to each of the first constraint 31 and the third portion 22A. The first connector 310 passes through the distal end 24 of the first loop 21 with both ends thereof wound around the distal end 24 of the first loop 21. The first connector 310 and the distal end 24 of the first loop 21 define a gap therebetween. A right end section 25A of the third portion 22A and a right end section 25B of the fourth portion 22B each constituting the proximal end 25 of the second loop 22 pass through the gap, and the first connector 310 is wound around the proximal end 25 of the second loop 22. In this manner, the first connector 310 is wound around the distal end 24 of the first loop 21 and wound around the proximal end 25 of the second loop 22, and thereby connects the distal end 24 of the first loop 21 and the proximal end 25 of the second loop 22 to each other.

The second connector 320 has a substantially loop or annular shape. The second connector 320 is defined by the linear member S connecting the second constraint 32 and the first portion 21A to each other, and is directly connected to each of the second constraint 32 and the first portion 21A. The second connector 320 passes through the distal end 26 of the second loop 22 with both ends thereof wound around the distal end 26 of the second loop 22. The second connector 320 and the distal end 26 of the second loop 22 define a gap therebetween. A right end section 23A of a first portion 21A and a right end section 23B of the second portion 21B each constituting a proximal end 23 of a first loop 21 pass through the gap, and the second connector 320 is wound around the proximal end 23 of the first loop 21. In this manner, the second connector 320 is wound around the distal end 26 of the second loop 22 and wound around the proximal end 23 of the first loop 21, and thereby connects the distal end 26 of the second loop 22 and the proximal end 23 of the first loop 21 to each other.

In the wire harness 300 according to the second embodiment having the above-described configuration, similarly to the first embodiment, adjacent loop parts 20 (the first loop 21 and the second loop 22 adjacent to each other) are connected to each other to define the first constraint 31 and the second constraint 32 in such a manner as to go around the circumferential surface of the bundle assembly W. The first constraint 31 and the second constraint 32 tighten the bundle assembly W with a tensile force applied to the linear member S, so that the binder 301 binds the bundle assembly W.

Further, in the wire harness 300 according to the second embodiment, similarly to the first embodiment, the connection between the adjacent loop parts 20 (the first loop 21 and the second loop 22 adjacent to each other) leads to restriction on shift of the linear member S owing to friction between adjacent portions of the linear member S and avoidance of a reduction in the tensile force applied to the linear member S. This consequently prevents a reduction in a binding force of binding the bundle assembly W.

In the wire harness 300 according to the second embodiment, the binder 301 includes the first connector 310 that connects a distal end 24 of a first loop 21 and a proximal end 25 of a second loop 22 to each other. A structure for the connection is sophisticated. Similarly, the binder 301 includes the second connector 320 that connects the distal end 26 of the second loop 22 and a proximal end 23 of another first loop 21 to each other. A structure for the connection is sophisticated. This configuration consequently prevents the distal end 24 of the first loop 21 and the proximal end 25 of the second loop 22 connected together from easily being disconnected from each other, and prevents the distal end 26 of the second loop 22 and the proximal end 23 of another first loop 21 connected together from being easily disconnected from each other. For instance, even in a case where the linear member S has a damaged portion, the configuration prevents the first loop 21 and the second loop 22 connected together from being disconnected from each other, and thus achieves prevention of loosening of the linear member S and prevention of a reduction in the binding force of the bundle assembly W.

The first connector 310 is defined by the linear member S connecting the first constraint 31 and the third portion 22A to each other, and is wound around the proximal end 25 of the second loop 22 and the distal end 24 of the first loop 21 to connect these ends to each other. This configuration can give a strong friction force between adjacent portions of the linear member S at the connection between the distal end 24 of the first loop 21 and the proximal end 25 of the second loop 22, and attains strict restriction on the shift of the linear member S. Similarly, the second connector 320 is defined by the linear member S connecting the second constraint 32 and the first portion 21A to each other, and is wound around the distal end 26 of the second loop 22 and the proximal end 23 of the another first loop 21 to connect these ends to each other. This configuration can give a strong friction force between adjacent portions of the linear member S at the connection between the distal end 26 of the second loop 22 and the proximal end 23 of the another first loop 21, and attains strict restriction on the shift of the linear member S.

### Third embodiment

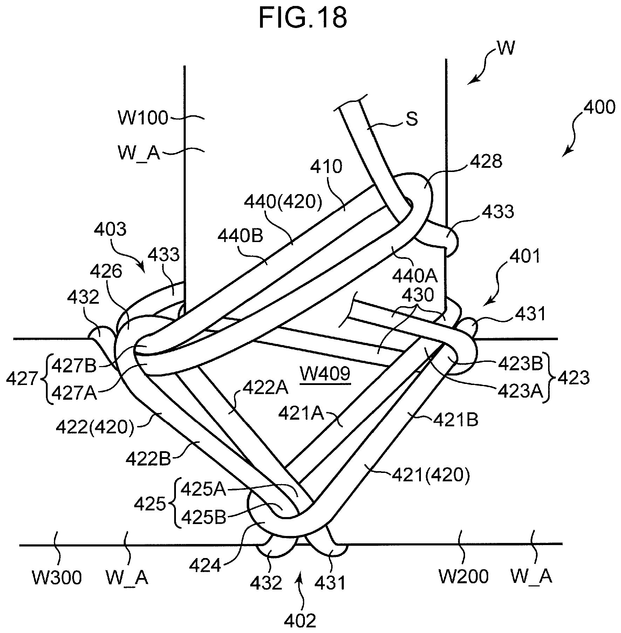

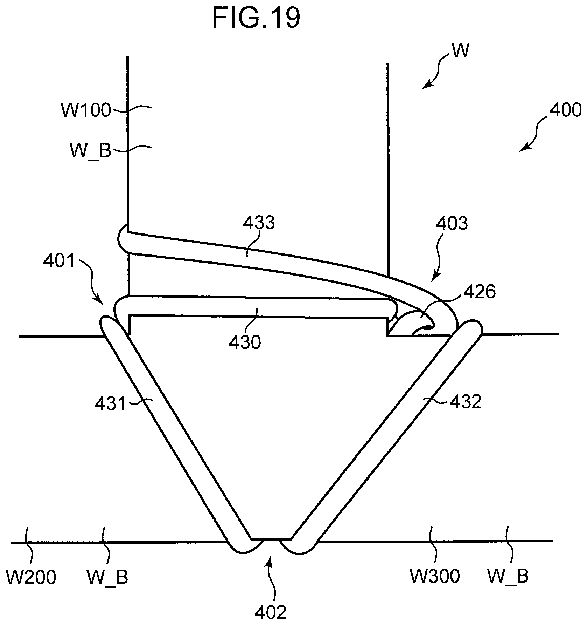

Next, a wire harness 400 according to a third embodiment of the present invention will be described. Fig. 18 is a schematic front view of the wire harness 400 according to the third embodiment. Fig. 19 is a schematic back view of the wire harness 400 in Fig. 18. In the description of the third embodiment below, detailed description for the same elements as those in the first embodiment will be omitted.

In the wire harness 400 according to the third embodiment, a bundle assembly W has a first bundle assembly segment W100 extending in a predetermined direction, and a second bundle assembly segment W200 and a third bundle assembly segment W300 each branching from an end of the first bundle assembly segment W100 and respectively extending in two directions different from each other. In the example illustrated in Fig. 18, the second bundle assembly segment W200 and the third bundle assembly segment W300 extend in opposite directions from the end of the first bundle assembly segment W100. Each of the bundle assembly segments W100, W200, and W300 includes a plurality of electric wires. Each of the bundle assembly segments W100, W200, and W300 has a circumferential surface divided into two equal sections of a first circumferential surface section W_A and a second circumferential surface section W_B located opposite the first circumferential surface section W_A in the circumferential direction. Loop parts 420 to be described later are located on the first circumferential surface section W_A. The first circumferential surface section W_A of each of the second bundle assembly segment W200 and the third bundle assembly segment W300 is continuous to the first circumferential surface section W_A of the first bundle assembly segment W100 at an intersection W409 where the second bundle assembly segment W200 and the third bundle assembly segment W300 intersect or meet.

The wire harness 400 according to the third embodiment includes: the bundle assembly W; and a binder 410 that is defined by a linear member S having flexibility and binds the bundle assembly around the intersection W409. In the third embodiment, similarly to the first embodiment, the binder 410 includes a plurality of loop parts 420 each constituting a portion of the linear member S that curves. It is noted here that the binder 410 includes only three loops of a first loop 421, a second loop 422, and a third loop 440 constituting the loop parts 420 in the third embodiment.

The first loop 421 has a substantially loop or annular shape and extends, on the first circumferential surface section W_A of the second bundle assembly segment W200, in directions intersecting longitudinal directions of the second bundle assembly segment W200. The first loop 421 extends from a first corner 401 where the first bundle assembly segment W100 and the second bundle assembly segment W200 intersect toward the third bundle assembly segment W300. In Fig. 18, the first loop 421 extends from the first corner 401 at a lower right end of the first bundle assembly segment W100 to a lower left position.

The first loop 421 has: a first portion 421A extending from a proximal end 423 being one end of the first loop 421 located closer to the first corner 401 in extension directions of the first loop 421 to a distal end 424 being another end of the first loop 421 located opposite the first corner 401 in the extension directions and having a curve or ring-like shape; and a second portion 421B returning from the distal end 424 to the proximal end 423. The proximal end 423 of the first loop 421 has an end section 423A being an end section of the first portion 421A and an end section 423B being an end section of the second portion 421B, each of the end sections being located closer to the first corner 401.

The second loop 422 has a substantially loop or annular shape and extends, on the first circumferential surface section W_A of the third bundle assembly segment W300, in directions intersecting longitudinal directions of the third bundle assembly segment W300. The second loop 422 extends in the directions intersecting the longitudinal directions of the third bundle assembly segment W300 from a second corner 402 serving as a boundary where the second bundle assembly segment W200 and the third bundle assembly segment W300 intersect. The second loop 422 extends from the second corner 402 toward a third corner 403 where the third bundle assembly segment W300 and the first bundle assembly segment W100 intersect or meet. In Fig. 18, the second loop 422 extends from the second corner 402 in an upper left direction toward the third corner 403 at a lower left end of the first bundle assembly segment W100.

The second loop 422 has: a third portion 422A extending from a proximal end 425 being one end of the second loop 422 located closer to the second corner 402 in extension directions of the second loop 422 to a distal end 426 being another end of the second loop 422 located opposite the second corner 402 in the extension directions and having a curve or ring-like shape; and a fourth portion 422B returning from the distal end 426 to the proximal end 425. The proximal end 425 of the second loop 422 has an end section 425A being an end section of the third portion 422A and an end section 425B being an end section of the fourth portion 422B, each of the end sections being located closer to the second corner 402.

The third loop 440 has a substantially loop or annular shape and extends, on the first circumferential surface section W_A of the first bundle assembly segment W100, in directions intersecting longitudinal directions of the first bundle assembly segment W100. The third loop 440 extends from the third corner 403 toward the first corner 401. In Fig. 18, the third loop 440 extends leftward from the third corner 403.

The third loop 440 has: a fifth portion 440A extending from a proximal end 427 being one end of the third loop 440 located closer to the third corner 403 in extension directions of the third loop 440 to a distal end 428 being another end of the third loop 440 located opposite the third corner 403 in the extension directions and having a curve or ring-like shape; and a sixth portion 440B returning from the distal end 428 to the proximal end 427. The proximal end 427 of the third loop 440 has an end section 427A being an end section of the fifth portion 440A and an end section 427B being an end section of the sixth portion 440B, each of the end sections being located closer to the third corner 403.

Each of the first loop 421, the second loop 422, and the third loop 440 is defined by the linear member S having the flexibility. Hence, the shape of each of the loops 421, 422, and 440 differs depending on a material of the linear member S and a tensile force applied to the linear member S, and thus is not limited to the shape illustrated in Fig. 18. The loops 421, 422, and 440 may have the same dimension or length, or may have different dimensions or lengths from each other. Besides, any ratio of the dimension or length of each of the loops 421, 422, and 440 to the thickness or diameter of the bundle assembly W is available without limitation.

The proximal end 425 of the second loop 422 passes through the distal end 424 of the first loop 421, and the distal end 424 of the first loop 421 is wound around the proximal end 425 of the second loop 422. That is to say, the proximal end 425 of the second loop 422 is engaged with the distal end 424 of the first loop 421, and the proximal end 425 of the second loop 422 and the distal end 424 of the first loop 421 are connected to each other.

The proximal end 427 of the third loop 440 passes through the distal end 426 of the second loop 422, and the distal end 426 of the second loop 422 is wound around the proximal end 427 of the third loop 440. That is to say, the proximal end 427 of the third loop 440 is engaged with the distal end 426 of the second loop 422, and the proximal end 427 of the third loop 440 and the distal end 426 of the second loop 422 are connected to each other.

As described heretofore, in the wire harness 400 according to the third embodiment, the first loop 421 and the second loop 422 are connected to each other, and the second loop 422 and the third loop 440 are connected to each other.

As illustrated in Fig. 18 and Fig. 19, the binder 410 includes a first constraint 431, a second constraint 432, and a third constraint 433 each defined by the linear member S.

The first constraint 431 extends from the proximal end 423 of the first loop 421 to the distal end 424 of the first loop 421 via the second circumferential surface section W_B of the second bundle assembly segment W200. The second constraint 432 extends from the proximal end 425 of the second loop 422 to the distal end 426 of the second loop 422 via the second circumferential surface section W_B of the third bundle assembly segment W300. The third constraint 433 extends from the proximal end 427 of the third loop 440 to the distal end 428 of the third loop 440 via the second circumferential surface section W_B of the first bundle assembly segment W100.

The first loop 421 and the first constraint 431 go around the circumferential surface of the second bundle assembly segment W200 once. That is to say, a whole circumference of the circumferential surface of the second bundle assembly segment W200 is surrounded by the first loop 421 and the first constraint 431. The second loop 422 and the second constraint 432 go around the circumferential surface of the third bundle assembly segment W300 once. That is to say, a whole circumference of the circumferential surface of the third bundle assembly segment W300 is surrounded by the second loop 422 and the second constraint 432. The third loop 440 and the third constraint 433 go around the circumferential surface of the first bundle assembly segment W100 once. That is to say, a whole circumference of the circumferential surface of the first bundle assembly segment W100 is surrounded by the third loop 440 and the third constraint 433.

The first constraint 431 is directly connected to the second portion 421B at the proximal end 423 of the first loop 421, and is directly connected to the third portion 422A at the proximal end 425 of the second loop 422. In this manner, the first constraint 431 is defined by the linear member S extending from the end section 423B of the second portion 421B constituting the proximal end 423 of the first loop 421 to the end section 425A of the third portion 422A constituting the proximal end 425 of the second loop 422.

The second constraint 432 is directly connected to the fourth portion 422B at the proximal end 425 of the second loop 422, and is directly connected to the fifth portion 440A at the proximal end 427 of the third loop 440. In this manner, the second constraint 432 is defined by the linear member S extending from the end section 425B of the fourth portion 422B constituting the proximal end 425 of the second loop 422 to the end section 427A of the fifth portion 440A constituting the proximal end 427 of the third loop 440.

The third constraint 433 is directly connected to the sixth portion 440B at the proximal end 427 of the third loop 440, and is defined by the linear member S extending from the end section 427B of the sixth portion 440B constituting the proximal end 427 of the third loop 440. As illustrated in Fig. 18, an end of the third constraint 433 located opposite the proximal end 427 of the third loop 440 passes through the inside of the distal end 428 of the third loop 440.

In the third embodiment, the binder 410 further includes a zeroth constraint 430 that goes around a whole circumference of the first bundle assembly segment W100. The zeroth constraint 430 is directly connected to the first portion 421A at the proximal end 423 of the first loop 421, and is defined by the linear member S extending from the end section 423A of the first portion 421A constituting the proximal end 423 of the first loop 421. The zeroth constraint 430 goes around the first bundle assembly segment W100 once from the proximal end 423 of the first loop 421 and returns to the proximal end 423 of the first loop 421, and is then wound around the proximal end 423 of the first loop 421 at the return position.

In the third embodiment, the linear member S being continuous to surround the second bundle assembly segment W200, the third bundle assembly segment W300, and the first bundle assembly segment W100 in order is solely chain-woven to define the binder 10. In the third embodiment, the linear member S is chain-woven into the loops all of which surrounds the bundle assembly W to thereby define the binder 10.

In the wire harness 400 according to the third embodiment having the above-described configuration, the first loop 421 and the first constraint 431 go around the whole circumference of the second bundle assembly segment W200, the second loop 422 and the second constraint 432 go around the whole circumference of the third bundle assembly segment W300, and the first loop 421 and the second loop 422 are connected to each other. The linear member S solely defining the loops 421 and 422 and the constraints 431 and 432 can constrain the second bundle assembly segment W200 and the third bundle assembly segment W300 alone. This configuration achieves a reduction in the labor required for the constraining and enables acceleration of a relevant constraining process in comparison with a configuration of individually constraining the second bundle assembly segment W200 and the third bundle assembly segment W300. Furthermore, the connection between the second bundle assembly segment W200 and the third bundle assembly segment W300 around the intersection 409 enables restriction on the movement of one of the bundle assembly segments by the other of the bundle assembly segments. This results in achievement in prevention of a reduction in a binding force of binding the electric wires due to the movement of the bundle assembly segments W100 and W200.

In the wire harness 400 according to the third embodiment, the whole circumference of the first bundle assembly segment W100 is surrounded by the third loop 440 and the third constraint 433 defined by the linear member S in addition to the whole circumference of the second bundle assembly segment W200 and the third bundle assembly segment W300, and the third loop 440 and the first loop 421 are connected to each other. This configuration achieves a reduction in the labor required to constrain the three bundle assembly segments W100, W200, and W300, and can ensure a binding force strong enough to bind the electric wires at each of the three bundle assembly segments W100, W200, and W300.

In the wire harness 400 according to the third embodiment, the first constraint 431 is directly connected to the third portion 422A at the proximal end 425 of the second loop 422. This achieves simplification of a wiring structure of the linear member S at the proximal end 425 of the second loop 422. This leads to a definite reduction in the labor required to constrain the bundle assembly segments W200 and W300 with the linear member S.

In the wire harness 400 according to the third embodiment, the first constraint 431 is directly connected to the second portion 421B, the second constraint 432 is directly connected to the fourth portion 422B and the fifth portion 440A, and the third constraint 433 is directly connected to the sixth portion 440B. This leads to achievement in simplification of the wiring structure of the linear member S and in the reduction in the labor required to constrain the bundle assembly segments W100, W200, and W300 with the linear member S.

### Fourth embodiment

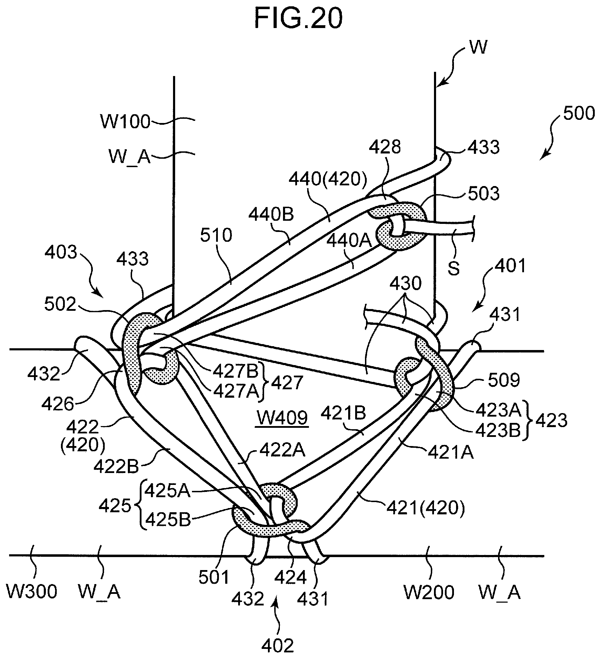

Next, a wire harness 500 according to a fourth embodiment of the present invention will be described. Fig. 20 is a side view of the wire harness 500 according to the fourth embodiment. The fourth embodiment is similar to the third embodiment except for a structure of a connection between loop parts 420 connected to each other. In the description of the fourth embodiment below, the same elements as those in the third embodiment will be described with the same reference signs or numerals as those in the third embodiment, and the detailed description therefor will be omitted. Besides, in Fig. 20, the elements which are the same as those in the fourth embodiment will be denoted by the same reference signs or numerals as those in the third embodiment.

Similarly to the wire harness according to the third embodiment, the wire harness 500 according to the fourth embodiment includes a binder 510 having: a first loop 421 having a first portion 421A and a second portion 421B and located on a first circumferential surface section W_A of a second bundle assembly segment W200; a second loop 422 having a third portion 422A and a fourth portion 422B and located on a first circumferential surface section W_A of a third bundle assembly segment W300; and a third loop 440 having a fifth portion 440A and a sixth portion 440B and located on a first circumferential surface section W_A of a first bundle assembly segment W100. Similarly to the binder in the third embodiment, the binder 510 of the wire harness 400 according to the fourth embodiment further includes a first constraint 431 extending from a proximal end 423 to a distal end 424 of the first loop 421 via a second circumferential surface section W_B of the second bundle assembly segment W200, a second constraint 432 extending from a proximal end 425 to a distal end 426 of the second loop 422 via a second circumferential surface section W_B of the third bundle assembly segment W300, and a third constraint 433 extending from a proximal end 427 to a distal end 428 of the third loop 440 via a second circumferential surface section W_B of the first bundle assembly segment W100.

Similarly to the third embodiment, in the wire harness 500 according to the fourth embodiment, the distal end 424 of the first loop 421 and the proximal end 425 of the second loop 422 are connected to each other, and the distal end 426 of the second loop 422 and the proximal end 427 of the third loop 440 are connected to each other. It is noted here that the binder 510 includes a connector, and the proximal end of a certain loop part 420 and the distal end of another loop part 420 are connected to each other via the connector in the second embodiment.

The distal end 424 of the first loop 421 is connected to the proximal end 425 of the second loop 422 via a first connector 501. Specifically, the binder 510 includes the first connector 501 that connects the distal end 424 of the first loop 421 and the proximal end 425 of the second loop 422 to each other. The distal end 426 of the second loop 422 is connected to the proximal end 427 of the third loop 440 via a second connector 502. Specifically, the binder 510 includes the second connector 502 that connects the distal end 426 of the second loop 422 and the proximal end 427 of the third loop 440 to each other. The first connector 501 corresponds to the "connector" in the present invention.

A linear member S is chain-woven into the first connector 501 and the second connector 502 without surrounding a bundle assembly W. Specifically, similarly to the linear member in the third embodiment, the linear member S being continuous to surround each of the bundle assembly segments W100, W200, and W300 is solely chain-woven to define the binder 510 in the fourth embodiment. Here, the linear member S is woven so that only one of two consecutive loops formed through the chain-weaving surrounds the bundle assembly W and the other of the loops avoids surrounding the bundle assembly W in the fourth embodiment. The loop that avoids surrounding the bundle assembly W constitutes the connector 501, 502.

More specifically, the first connector 501 has a substantially loop or annular shape. The first connector 501 is defined by the linear member S connecting the first constraint 31 and the third portion 22A to each other, and is directly connected to each of the first constraint 431 and the third portion 422A. The first connector 501 passes through the distal end 424 of the first loop 421 with both ends thereof wound around the distal end 424 of the first loop 421. The first connector 501 and the distal end 424 of the first loop 421 define a gap therebetween. An end section 425A of the third portion 422A and an end section 425B of the fourth portion 422B each constituting the proximal end 425 of the second loop 422 pass through the gap, and the first connector 501 is wound around the proximal end 425 of the second loop 422. In this manner, the first connector 501 is wound around the distal end 424 of the first loop 421 and wound around the proximal end 425 of the second loop 422, and thereby connects the distal end 424 of the first loop 421 and the proximal end 425 of the second loop 422 to each other.

The second connector 502 has a substantially loop or annular shape. The second connector 502 is defined by the linear member S connecting the second constraint 432 and the fifth portion 440A to each other, and is directly connected to each of the second constraint 432 and the fifth portion 440A. The second connector 502 passes through the distal end 426 of the second loop 422 with both ends thereof wound around the distal end 426 of the second loop 422. The second connector 502 and the distal end 426 of the second loop 422 define a gap therebetween. An end section 427A of the fifth portion 440A and an end section 427B of the sixth portion 440B each constituting the proximal end 427 of the third loop 440 pass through the gap, and the second connector 502 is wound around the proximal end 427 of the third loop 440. In this manner, the second connector 320 is wound around the distal end 426 of the second loop 422 and wound around the proximal end 427 of the third loop 440, and thereby connects the distal end 426 of the second loop 422 and the proximal end 427 of the third loop 440 to each other.

Unlike the third embodiment, a portion 503 of the linear member S extending from the third constraint 433 at the distal end 428 of the third loop 440 is wound around the distal end 428 of the third loop 440 in the same manner as the first connector 501 in the fourth embodiment. Specifically, a portion extending from the third constraint 433 is chain-woven at the distal end 428 of the third loop 440 into one loop 503 through the chain-weaving at the distal end 428 of the third loop 440.

In the fourth embodiment, a portion 509 of the linear member S located between a zeroth constraint 430 and the first portion 421A to connect the constraint 430 and the first portion 421A to each other is wound around the proximal end 423 of the first loop 421 in the same manner as the first connector 501. Specifically, the portion 509 is chain-woven at the proximal end 423 of the first loop 421 into one loop 509 through the chain-weaving at the proximal end 423 of the first loop 421.

In the wire harness 500 according to the fourth embodiment, similarly to the third embodiment, the linear member S can constrain the three bundle assembly segments W100, W200, and W300 alone. This configuration achieves a reduction in the labor required for the constraining and achieves acceleration of a relevant constraining process. The configuration further achieves prevention of a reduction in a binding force of binding the electric wires at each of the bundle assembly segments W100, W200, and W300 accompanied by vibration.

In the wire harness 400 according to the fourth embodiment, the first connector 501 that connects the distal end 424 of the first loop 421 and the proximal end 425 of the second loop 422 to each other is defined by the linear member S connecting the first constraint 431 and the third portion 422A to each other. A structure for the connection is sophisticated. This configuration prevents the distal end 424 of the first loop 421 and the proximal end 425 of the second loop 422 connected together from being easily disconnected from each other.

In the wire harness 400 according to the fourth embodiment, the first connector 501 is defined by the linear member S connecting the first constraint 431 and the third portion 422A to each other, and is wound around the distal end 424 of the first loop 421 and the proximal end 425 of the second loop 422 to connect these ends to each other. This configuration can give a strong friction force between the portions of the linear member S at the connection, and attains strict restriction on the shift of the linear member S.

In the wire harness 400 according to the fourth embodiment, the second connector 502 is defined by the linear member S connecting the second constraint 432 and the fifth portion 440A to each other, and is wound around the distal end 426 of the second loop 422 and wound around the proximal end 427 of the third loop 440 to connect these ends to each other. This configuration can give a strong friction force between the portions of the linear member S at the connection, and attains strict restriction on the shift of the linear member S.

In the wire harness 400 according to the fourth embodiment, the portion 503 of the linear member S extending from the third constraint 433 is wound around the distal end 428 of the third loop 440, and the portion 509 of the linear member S located between the zeroth constraint 430 and the first portion 421A is wound around the proximal end 423 of the first loop 421. This configuration prevents the linear member S from loosening at each of the distal end 428 of the third loop 440 and the proximal end 423 of the first loop 421.

### Modifications

The embodiments of the present invention are described heretofore, but are merely described as examples for embodying the present invention. Accordingly, the present invention is not limited to the embodiments described above, and each embodiment may be appropriately changed to an extent without deviation from the gist of the present invention.

For instance, in the second embodiment, a distal end 24 of a first loop 21 and a proximal end 25 of a second loop 22 are connected to each other via a first connector 310, and a proximal end 23 of another first loop 21 and a distal end 26 of the second loop 22 are connected to each other via a second connector 320. In this regard, one of the first connector 310 and the second connector 320 may be excluded. The distal end 24 of the first loop 21 and the proximal end 25 of the second loop may connect each other by using an alternative structure similar to that in the first embodiment. The proximal end 23 of the another first loop 21 and the distal end 26 of the second loop 22 may connect each other by using an alternative structure similar to that in the first embodiment.

In the second embodiment, each of the first connector 310 and the second connector 320 is in the form of one loop resulting from chain-weaving. In this regard, each of the connectors 310, 320 may be in the form of two or more consecutive loops.

In each embodiment, the linear member S continuously and solely defines each portion and each constraint of each loop part. Alternatively, the linear member S may include a plurality of linear member segments connected to each other to be a single linear member. Further alternatively, a plurality of continuous linear members may be bound and chain-woven around the bundle assembly W so that each portion and each constraint is defined by two adjacent linear members.

The present invention may be applied to a bundle assembly W branching in three or more different directions from an end of a first bundle assembly segment W100. In this application, the structure of the binder 410 in the third embodiment or the binder 510 in the fourth embodiment may be applied to another bundle assembly.

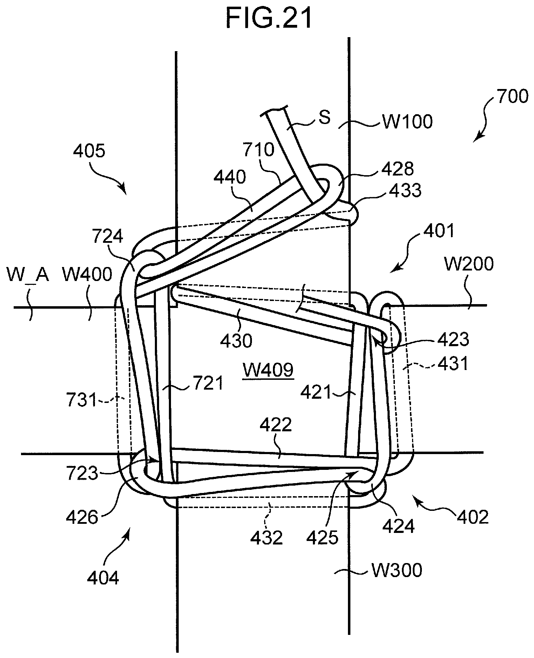

Fig. 21 illustrates a wire harness 700 including a bundle assembly W having a first bundle assembly segment W100, and a second bundle assembly segment W200, a third bundle assembly segment W300, and a fourth bundle assembly segment W400 each branching from an end of the first bundle assembly segment W100 and respectively extending in different directions from each other. In comparison with the bundle assembly W in the third embodiment, the bundle assembly W in Fig. 21 additionally has the fourth bundle assembly segment W400 branching from the first bundle assembly segment W100 between the third bundle assembly segment W300 and the first bundle assembly segment W100. Accordingly, in the wire harness 700, a fourth corner 404 where the third bundle assembly segment W300 and the fourth bundle assembly segment W400 intersect, and a fifth corner 405 where the fourth bundle assembly segment W400 and the first bundle assembly segment W100 intersect are defined. In Fig. 21, the elements which are the same as those in the third embodiment will be denoted by the same reference signs or numerals as those in the third embodiment. In the wire harness 700 in Fig. 21, a structure of constraining each of the second bundle assembly segment W200 and the third bundle assembly segment W300 with a binder 710 is adapted for the fourth bundle assembly segment W400, and a structure of connecting the second bundle assembly segment W200 and the third bundle assembly segment W300 to each other with the binder 710 is adapted for a connection structure of the third bundle assembly segment W300 and the fourth bundle assembly segment W400.

Specifically, the binder 710 of the wire harness 700 in Fig. 21 has a first loop 421, a second loop 422, a first constraint 431, a second constraint 432, and additionally a fourth loop 721 extending from the fourth corner 404 toward the fifth corner 405 on a first circumferential surface section W_A of the fourth bundle assembly segment W400, and a fourth constraint 731 extending from a proximal end 723 to a distal end 724 of the fourth loop 721 via a second circumferential surface section W_B of the fourth bundle assembly segment W400. The second loop 422 extends from a second corner 402 toward the fourth corner 404. A distal end 426 of the second loop 422 and the fourth loop 721 are connected to each other around the fourth corner 404 in the same manner that the first loop 421 and the second loop 422 are connected to each other. In other words, the proximal end 723 of the fourth loop 721 passes through the distal end 426 of the second loop 422 so that these ends are connected to each other. In the wire harness 700 in Fig. 21, a third loop 440 is not connected to the second loop 422, but is connected to the distal end 724 of the fourth loop 721.

In each of the third embodiment, the fourth embodiment, and the example in Fig. 21, the first loop 421 extends from the first corner 401 toward the second corner 402. In this regard, in the case where the bundle assembly W is branched, the first loop may extend in any direction intersecting the longitudinal directions of the second bundle assembly segment W200 without limitation to the mentioned extension directions. Similarly, the second loop may extend in any direction intersecting the longitudinal directions of the third bundle assembly segment W300 without limitation to the mentioned extension directions.

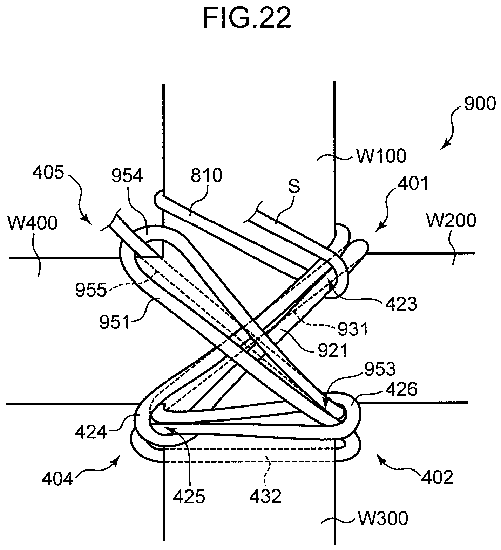

For instance, in a case where a bundle assembly W has a structure illustrated in Fig. 21 as in a wire harness 900 in Fig. 22, a first loop 921 may extend from a first corner 401 toward a fourth corner 404. In this case, a first constraint 931 extends from the first corner 401 toward the fourth corner 404. In Fig. 22, the elements which are the same as those in the third embodiment will be denoted by the same reference signs or numerals as those in the third embodiment.

In the example in Fig. 22, a second loop 422 has a proximal end 425 located closer to the fourth corner 404 and a distal end 426 located closer to the second corner 402. Further, a distal end 424 of the first loop 921 and the proximal end 425 of the second loop 422 are connected to each other around the fourth corner 404. Besides, a binder 910 has a fifth loop 951 having a substantially loop or annular shape and extending, on a first circumferential surface section W_A of a fourth bundle assembly segment W400, from the second corner 402 to a fifth corner 405. A proximal end 953 of the fifth loop 951 passes through the distal end 426 of the second loop 422 around the second corner 402 so that these ends connected to each other. The binder 910 further includes a fifth constraint 955 extending from the proximal end 953 to a distal end 954 of the fifth loop 951 via a second circumferential surface section W_B of the fourth bundle assembly segment W400.

The bundle assembly for the present invention is not limited to a bundle assembly having a circumferential surface covered with a resin material.

### Conclusion

The embodiments and modifications described heretofore involve the following disclosure.

A wire harness according to one aspect of the present disclosure includes: a bundle assembly including a plurality of electric wires; and a binder that is defined by a linear member having flexibility and binds the bundle assembly. The binder has a plurality of loop parts being consecutive. The loop parts are arrayed in longitudinal directions of the bundle assembly, adjacent loop parts of the loop parts being connected to each other to bind the bundle assembly.

In the configuration, the binder has a plurality loop parts being consecutive. The loop parts are arrayed in the longitudinal directions of the bundle assembly, adjacent loop parts of the loop parts being connected to each other to bind the bundle assembly.

The bundle assembly is continuously bound with the binder defined by the linear member having the flexibility. The configuration enables automation and acceleration of the work of binding the electric wires with the binder.

Further, adjacent loop parts are connected to each other to bind the bundle assembly. This consequently achieves less displacement of the binder relative to the bundle assembly and prevention of a reduction in a binding force of binding the electric wires.

In this configuration, the loop parts may include: first loops each constituting a portion of the linear member that curves; and second loops each constituting another portion of the linear member that curves. The first loops and the second loops may repetitively alternate. Each of the first loops and each of the second loops located adjacent to each other may be connected to each other.

In the configuration, the first loops and the second loops repetitively alternate, and each of the first loops and each of the second loops located adjacent to each other are connected to each other.

The first loops and the second loops repetitively alternate, and are connected to each other. This consequently achieves less displacement of the binder relative to the bundle assembly and prevention of a reduction in a binding force of binding the electric wires.

In this configuration, one second loop of the second loops may pass through one first loop of the first loops in such a manner that the one first loop and the one second loop are connected to each other, and another first loop may pass through the one second loop in such a manner that the one second loop and the another first loop are connected to each other.

In the configuration, consecutive first and second loops alternately pass therethrough so that the first loops and the second loops are connected to each other.

The first loops and the second loops alternately pass therethrough to be connected to each other. This consequently achieves less displacement of the binder relative to the bundle assembly and prevention of a reduction in a binding force of binding the electric wires.

In this configuration, the linear member may define a first constraint between the one first loop and the one second loop connected to each other by the one second loop passing through the one first loop, the linear member may define a second constraint between the another first loop and the one second loop connected to each other by the another first loop passing through the one second loop. The first constraint and the second constraint may bind the bundle assembly.

In this configuration, each of the first constraint and the second constraint located between the consecutive first and second loops binds the bundle assembly.

The first constraint and the second constraint are less likely to loosen owing to the connection between the first loop and the second loop. This consequently achieves prevention of a reduction in a binding force of binding the electric wires.

Specifically, in the configuration, the bundle assembly has a circumferential surface divided into two equal sections of a first circumferential surface section and a second circumferential surface section located opposite the first circumferential surface section in a circumferential direction. The first loops and the second loops are located on the first circumferential surface section and extend in the longitudinal directions of the bundle assembly. Each of the first loops has a first portion extending from a proximal end being one end of the first loop in the longitudinal directions to a distal end being another end of the first loop, and a second portion returning from the distal end to the proximal end of the first loop. Each of the second loops has a third portion extending from a proximal end being one end of the second loop in the longitudinal directions to a distal end being another end of the second loop, and a fourth portion returning from the distal end to the proximal end of the second loop.

In this configuration, the proximal end of the second loop is connected to a distal end of a certain first loop adjacent thereto on one side of the second loop in the longitudinal directions. The distal end of the second loop is connected to a proximal end of another first loop adjacent thereto on the other side of the second loop in the longitudinal directions. The binder includes: a first constraint that extends from a proximal end of the certain first loop to the distal end of the certain first loop via the second circumferential surface section; and a second constraint that extends from the proximal end of the second loop to the distal end of the second loop via the second circumferential surface section.

In the configuration, the first loop and the first constraint in combination, and the second loop and the second constraint in combination constrain the bundle assembly, and further firmly bind the electric wires.

Specifically, the certain first loop and the first constraint go around the circumferential surface of the bundle assembly once. This configuration enables the certain first loop and the first constraint to bind the electric wires.

The second loop and the second constraint go around the circumferential surface of the bundle assembly once. This configuration enables the second loop and the second constraint to bind the electric wires.

In this configuration, preferably, the linear member solely and continuously defines the first portion, the second portion, the third portion, the fourth portion, the first constraint, and the second constraint.

This configuration allows the linear member to easily solely and continuously constrain the bundle assembly including the electric wires.

In this configuration, preferably, each of the first constraint and the second constraint is longer than each first loop and the second loop in the circumferential direction of the bundle assembly.

This configuration enables the first constraint and the second constraint to firmly constrain the bundle assembly including the electric wires.

In this configuration, preferably, the first constraint is directly connected to the third portion at the proximal end of the second loop.

This configuration achieves simplification of a structure of the binder around the proximal end of the second loop. The simplification of the structure leads to reliable achievement in acceleration of the process of constraining the bundle assembly with the linear member.

In this configuration, preferably, the second constraint is directly connected to the first portion at the proximal end of the another first loop.

This configuration achieves simplification of the structure of the binder around the proximal end of the another first loop. The simplification of the structure leads to reliable achievement in acceleration of the process of constraining the bundle assembly with the linear member.

In this configuration, preferably, the binder includes a first connector that is defined by the linear member connecting the first constraint and the third portion to each other and that connects the distal end of the certain first loop to the proximal end of the second loop located adjacent to the certain first loop on the other side of the certain first loop in the longitudinal directions.

In this configuration, the structure of connecting the distal end of the first loop and the proximal end of the second loop to each other is sophisticated. This configuration thus prevents the ends connected together from being easily disconnected from each other. In other words, even in a case where the linear member has a damaged portion, the configuration prevents the distal end of the first loop and the proximal end of the second loop connected together from being disconnected from each other due to loosening of the linear member.

In this configuration, preferably, the binder includes a second connector that is defined by the linear member connecting the second constraint and the first portion to each other and that connects the distal end of the second loop to the proximal end of the another first loop located adjacent to the second loop on the other side of the second loop in the longitudinal directions.

In this configuration, the structure of connecting the distal end of the second loop and the proximal end of the another first loop to each other is sophisticated. This configuration thus prevents the ends connected together from being easily disconnected from each other. In other words, even in a case where the linear member has a damaged portion, the configuration prevents the distal end of the second loop and the proximal end of the another first loop connected together from being disconnected from each other due to loosening of the linear member.

In this configuration, preferably, the proximal ends of the two first loops adjacent to each other are apart from each other at a distance which is longer than 0 mm and not longer than 18 mm in the longitudinal directions.

This configuration prevents a large fluctuation in shift or movement of the wire harness due to a change in the temperature.

In this configuration, preferably, an imaginary circle surrounding an entirety of the bundle assembly through points on the circumferential surface of the bundle assembly has a diameter ranging from 8 mm to 20 mm in a view in the longitudinal directions.

This configuration prevents a large fluctuation in the shift or movement of the wire harness due to a change in the temperature.

Here, in the case where the circumferential surface of the bundle assembly is covered with a resin material, the flexibility of the bundle assembly relatively greatly changes in association with the change in the temperature. This results in a high likelihood of a large fluctuation in the shift or movement of the wire harness. In this respect, the configuration including the bundle assembly having the circumferential surface covered with the resin material effectively prevents such a large fluctuation in the shift or movement of the wire harness accompanied by the change in the temperature.

A wire harness according to another aspect of the present disclosure includes: a bundle assembly including a plurality of electric wires; and a binder that is defined by a linear member having flexibility and binds the bundle assembly. The bundle assembly has a first bundle assembly segment extending in a predetermined direction, and a second bundle assembly segment and a third bundle assembly segment each branching from an end of the first bundle assembly segment and respectively extending in two directions different from each other. Each of the first bundle assembly segment, the second bundle assembly segment, and the third bundle assembly segment has a circumferential surface divided into two equal sections of a first circumferential surface section and a second circumferential surface section located opposite the first circumferential surface section in a circumferential direction. The binder includes: a first loop located on the first circumferential surface section of the second bundle assembly segment and extending in a direction intersecting longitudinal directions of the second bundle assembly segment; a second loop located on the first circumferential surface section of the third bundle assembly segment and extending in a direction intersecting longitudinal directions of the third bundle assembly segment; a first constraint extending from a proximal end being one end of the first loop to a distal end being another end of the first loop via the second circumferential surface section of the second bundle assembly segment; and a second constraint extending from a proximal end being one end of the second loop to a distal end being another end of the second loop via the second circumferential surface section of the third bundle assembly segment. The first loop has a first portion extending from the proximal end of the first loop to the distal end of the first loop, and a second portion returning from the distal end of the first loop to the proximal end of the first loop. The second loop has a third portion extending from the proximal end of the second loop to the distal end of the second loop, and a fourth portion returning from the distal end of the second loop to the proximal end of the second loop. The distal end of the first loop and the proximal end of the second loop are connected to each other.

This configuration enables the linear member solely defining each loop and each constraint to constrain the second bundle assembly segment and the third bundle assembly segment alone. The configuration thus achieves a reduction in the labor required for constraining and enables acceleration of a relevant constraining process in comparison with a configuration of individually constraining the second bundle assembly segment and the third bundle assembly segment. In addition, one of the second bundle assembly segment and the third bundle assembly segment restricts the shift of the other of the bundle assembly segments. The configuration thus achieves prevention of an associated vibration or a reduction in a binding force of binding the electric wires at each of the bundle assembly segments attributed to the vibration.

In this configuration, preferably, the first constraint is directly connected to the third portion at the proximal end of the second loop.

This configuration achieves simplification of a wiring structure of the linear member at the proximal end of the second loop, and achieves a reduction in the labor required to constrain the second bundle assembly segment and the third bundle assembly segment with the linear member.

In this configuration, preferably, the binder includes a connector that is defined by the linear member connecting the first constraint and the third portion to each other and that connects the distal end of the first loop and the proximal end of the second loop to each other.

In this configuration, the structure of connecting the distal end of the first loop and the proximal end of the second loop to each other is sophisticated. This configuration thus prevents the ends connected together from being easily disconnected from each other.

A wire harness binding processing method according to another aspect of the present is a wire harness binding processing method for binding a bundle assembly including a plurality of electric wires with a binder defined by a linear member having flexibility to form a wire harness. The wire harness binding processing method includes a connection step of forming a plurality of loop parts and connecting the loop parts to each other in longitudinal directions of the bundle assembly.

In the configuration, the connection step of forming a plurality of loop parts and connecting the loop parts to each other in the longitudinal directions of the bundle assembly allows the binder defined by the linear member having the flexibility to continuously bind the bundle assembly. The configuration enables automation and acceleration of the work of binding the electric wires with the binder.

A wire harness binding processor according to another aspect of the present disclosures is a wire harness binding processor that binds a bundle assembly including a plurality of electric wires with a binder defined by a linear member having flexibility to form a wire harness. The wire harness binding processor includes: a linear member supply part that supplies the linear member in the vicinity of the bundle assembly; and a loop forming part that forms a loop part by curving a portion of the linear member supplied from the linear member supply part. The loop forming part is configured to form the binder by continuously forming a plurality of the loop parts with respect to the linear member supplied from the linear member supply part, arraying the loop parts in longitudinal directions of the bundle assembly, and connecting adjacent loop parts of the loop parts in the longitudinal directions of the bundle assembly to each other.

In this configuration, the loop forming part is configured to form the binder by continuously forming a plurality of loop parts with respect to the linear member supplied from the linear member supply part, arraying the loop parts in the longitudinal directions of the bundle assembly, and connecting adjacent loop parts of the loop parts in the longitudinal directions of the bundle assembly to each other.

The bundle assembly is continuously bound with the binder defined by the linear member having the flexibility. The configuration enables automation and acceleration of the work of binding the electric wires with the binder.

Further, adjacent loop parts are connected to each other to bind the bundle assembly. This consequently achieves less displacement of the binder relative to the bundle assembly and prevention of a reduction in a binding force of binding the electric wires.

In this configuration, the loop forming part may form a first loop by curving a portion of the linear member and form a second loop by curving another portion of the linear member, and repetitively form a plurality of the first loops and a plurality of the second loops, and connect the loop parts to each other by connecting each of the first loops and each of the second loops adjacent to each other.

In this configuration, the loop parts are connected to each other by connecting each first loop and each second loop adjacent thereto to each other.

The first loops and the second are repetitively formed and connected to each other. This enables acceleration of the work of binding the electric wires with the binder.

In this configuration, the loop forming part may be configured to connect one first loop of the first loops and one second loop of the second loops to each other by inserting the one second loop into the one first loop, and connect another first loop of the first loops and the one second to each other by inserting the another first loop into the one second loop.

This configuration makes consecutive first and second loops alternately pass therethrough so that the first loops and the second loops are connected to each other.

The first loops and the second loops are repetitively formed and connected to each other by alternately passing therethrough. This configuration enables acceleration of the work of binding the electric wires with the binder.

In this configuration, the loop forming member may form the one second loop connected to the one first loop by pulling a portion of the linear member so that the portion passes through the one first loop constituting the linear member, and form the another first loop connected to the one second loop by pulling another portion of the linear member so that the another portion passes through the one second loop constituting the linear member.

In this configuration, the loop forming member may pull a portion of the linear member so that the portion passes through one first or second loop constituting the linear member, and thereby form a subsequent loop and connect the subsequent loop and the first or second loop to each other at the same time.

This configuration achieves connection between the loop parts to each other without a complicated operation of the loop forming member.

In this configuration, directions intersecting the longitudinal directions of the bundle assembly may be defined as first directions, and directions intersecting the longitudinal directions of the bundle assembly and the first directions may be defined as second directions. The loop forming part and the linear member supply part may be configured to: move at a predetermined distance in the longitudinal directions of the bundle assembly per reciprocation in the first directions; form the one second loop connected to the one first loop on one side of the bundle assembly in the first directions; and form the another first loop connected to the one second loop on the other side of the bundle assembly in the first directions. The loop forming part may reciprocate in the first directions by passing through one side of the bundle assembly in the second directions. The linear member supply part may reciprocate in the first directions by passing through the other side of the bundle assembly in the second directions.

Here, the "first directions intersecting the longitudinal directions of the bundle assembly" correspond to the X-axial directions in the embodiment.

In this configuration, the loop forming part and the linear member supply part move together relative to the bundle assembly, array the loop parts to surround a circumference of the bundle assembly, and connect adjacent loop parts to each other, to thereby bind the bundle assembly.

This configuration achieves binding of the bundle assembly without a complicated operation of each of the loop forming part and the linear member supply part.

In this configuration, the loop forming part and the linear member supply part may change a movement distance in the longitudinal directions of the bundle assembly for movement per reciprocation in the first directions.

In this configuration, such a change in the movement distance in the longitudinal directions of the bundle assembly by the loop forming part and the linear member supply part leads to a change in a pitch for binding the bundle assembly with the first loop and the second loop. This consequently achieves appropriate binding of the bundle assembly.

## Claims

1. A wire harness, comprising:
a bundle assembly having a length and including a plurality of electric wires; and
a binder that is defined by a linear member having flexibility and binds the bundle assembly, wherein
the binder has a plurality of loop parts being consecutive, and
the loop parts are arrayed in longitudinal directions of the bundle assembly, adjacent loop parts of the loop parts being connected to each other to bind the bundle assembly.

2. The wire harness according to claim 1, wherein
the loop parts include:
first loops each constituting a portion of the linear member that curves; and
second loops each constituting another portion of the linear member that curves,
the first loops and the second loops repetitively alternating, and
each of the first loops and each of the second loops located adjacent to each other are connected to each other.

3. The wire harness according to claim 2, wherein
one second loop of the second loops passes through one first loop of the first loops in such a manner that the one first loop and the one second loop are connected to each other, and
another first loop passes through the one second loop in such a manner that the one second loop and the another first loop are connected to each other.

4. The wire harness according to claim 3, wherein
the linear member defines a first constraint between the one first loop and the one second loop connected to each other by the one second loop passing through the one first loop,
the linear member defines a second constraint between the another first loop and the one second loop connected to each other by the another first loop passing through the one second loop, and
the first constraint and the second constraint bind the bundle assembly.

5. The wire harness according to claim 2, wherein
the bundle assembly has a circumferential surface divided into two equal sections of a first circumferential surface section and a second circumferential surface section located opposite the first circumferential surface section in a circumferential direction,
the first loops and the second loops are located on the first circumferential surface section and extend in the longitudinal directions of the bundle assembly,
each of the first loops has a first portion extending from a proximal end being one end of the first loop in the longitudinal directions to a distal end being another end of the first loop, and a second portion returning from the distal end to the proximal end of the first loop, and
each of the second loops has a third portion extending from a proximal end being one end of the second loop in the longitudinal directions to a distal end being another end of the second loop, and a fourth portion returning from the distal end to the proximal end of the second loop.

6. The wire harness according to claim 5, wherein
the proximal end of the second loop is connected to a distal end of a certain first loop adjacent thereto on one side of the second loop in the longitudinal directions,
the distal end of the second loop is connected to a proximal end of another first loop adjacent thereto on the other side of the second loop in the longitudinal directions, and
the binder includes:
a first constraint that extends from a proximal end of the certain first loop to the distal end of the certain first loop via the second circumferential surface section; and
a second constraint that extends from the proximal end of the second loop to the distal end of the second loop via the second circumferential surface section.

7. The wire harness according to claim 6, wherein
the certain first loop and the first constraint go around the circumferential surface of the bundle assembly once.

8. The wire harness according to claim 6, wherein
the second loop and the second constraint go around the circumferential surface of the bundle assembly once.

9. The wire harness according to claim 6, wherein
the linear member solely and continuously defines the first portion, the second portion, the third portion, the fourth portion, the first constraint, and the second constraint.

10. The wire harness according to claim 6, wherein
each of the first constraint and the second constraint is longer than each first loop and the second loop in the circumferential direction of the bundle assembly.

11. The wire harness according to claim 6, wherein
the first constraint is directly connected to the third portion at the proximal end of the second loop.

12. The wire harness according to claim 6, wherein
the second constraint is directly connected to the first portion at the proximal end of the another first loop.

13. The wire harness according to claim 6, wherein
the binder includes a first connector that is defined by the linear member connecting the first constraint and the third portion to each other and that connects the distal end of the certain first loop to the proximal end of the second loop located adjacent to the certain first loop on the other side of the certain first loop in the longitudinal directions.

14. The wire harness according to claim 6, wherein
the binder includes a second connector that is defined by the linear member connecting the second constraint and the first portion to each other and that connects the distal end of the second loop to the proximal end of the another first loop located adjacent to the second loop on the other side of the second loop in the longitudinal directions.

15. The wire harness according to claim 6, wherein
the proximal ends of the two first loops adjacent to each other are apart from each other at a distance which if longer than 0 mm and not longer than 18 mm in the longitudinal directions.

16. The wire harness according to claim 6, wherein
an imaginary circle surrounding an entirety of the bundle assembly through points on the circumferential surface of the bundle assembly has a diameter ranging from 8 mm to 20 mm in a view in the longitudinal directions.

17. The wire harness according to claim 15 or 16, wherein
the circumferential surface of the bundle assembly is covered with a resin material.

18. wire harness, comprising:
a bundle assembly having a length and including a plurality of electric wires; and
a binder that is defined by a linear member having flexibility and binds the bundle assembly, wherein
the bundle assembly has a first bundle assembly segment extending in a predetermined direction, and a second bundle assembly segment and a third bundle assembly segment each branching from an end of the first bundle assembly segment and respectively extending in two directions different from each other,
each of the first bundle assembly segment, the second bundle assembly segment, and the third bundle assembly segment has a circumferential surface divided into two equal sections of a first circumferential surface section and a second circumferential surface section located opposite the first circumferential surface section in a circumferential direction,
the binder includes:
a first loop located on the first circumferential surface section of the second bundle assembly segment and extending in a direction intersecting longitudinal directions of the second bundle assembly segment;
a second loop located on the first circumferential surface section of the third bundle assembly segment and extending in a direction intersecting longitudinal directions of the third bundle assembly segment;
a first constraint extending from a proximal end being one end of the first loop to a distal end being another end of the first loop via the second circumferential surface section of the second bundle assembly segment; and
a second constraint extending from a proximal end being one end of the second loop to a distal end being another end of the second loop via the second circumferential surface section of the third bundle assembly segment,
the first loop has a first portion extending from the proximal end of the first loop to the distal end of the first loop, and a second portion returning from the distal end of the first loop to the proximal end of the first loop,
the second loop has a third portion extending from the proximal end of the second loop to the distal end of the second loop, and a fourth portion returning from the distal end of the second loop to the proximal end of the second loop, and
the distal end of the first loop and the proximal end of the second loop are connected to each other.

19. The wire harness according to claim 18, wherein
the first constraint is directly connected to the third portion at the proximal end of the second loop.

20. The wire harness according to claim 18, wherein
the binder includes a connector that is defined by the linear member connecting the first constraint and the third portion to each other and that connects the distal end of the first loop and the proximal end of the second loop to each other.

21. A wire harness binding processing method for binding a bundle assembly including a plurality of electric wires with a binder defined by a linear member having flexibility to form a wire harness, the wire harness binding processing method comprising:
a connection step of forming a plurality of loop parts and connecting the loop parts to each other in longitudinal directions of the bundle assembly.
